# EUROPEAN PATENT APPLICATION

(11) **EP 1 357 470 A2**
(43) Date of publication of application: **29.10.2003**
(21) Application number: 03009247.2
(22) Date of filing: 23.04.2003
(51) Int. Cl.: G06F 9/445

(54) **Distributed server software distribution**

(30) Priority: 23.04.2002 US 375154 P
(71) Applicant: Secure Resolutions, Inc., Beaverton, Oregon 97007 (US)
(72) Inventor: Melchione, Daniel J., Beaverton, Oregon 97007 (US); Huang, Ricky Y., Portland, Oregon 97223 (US); Vigue, Charles L., LaPine, Oregon 97739 (US); Stoilov, Martin K., Beaverton, Oregon 97006 (US); Melchione, Robert J., Hillsboro, Oregon 97123 (US)
(74) Representative: Meddle, Alan Leonard

(57) **Abstract**

Software can be acquired via a distributed server arrangement. Software designated as to be installed at a set of nodes can be acquired from a local peer node. Nodes can include agents that periodically query a data center to discover software designated as to be installed on the node. The designated software can then be acquired via one or more references to peer nodes. The nodes can periodically update the data center to accurately indicate which software is available at the nodes. Proxy server nodes can serve as liaisons between a data center and other nodes that lack direct network access to the data center. Various aspects can be performed within an application service provider scenario. If desired, any node can be designated as a sharing peer node, a proxy server node, or both.

## Description

### PRIORITY CLAIM

This application claims the benefit of U.S. Provisional Patent Application No. 60/375,154, filed April 23, 2002, which is hereby incorporated herein by reference.

### TECHNICAL FIELD

The technical field relates to software distribution and, more particularly, to efficient software distribution across a network of nodes via distributed server techniques.

### COPYRIGHT AUTHORIZATION

A portion of the disclosure of this patent document contains material that is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### CROSS-REFERENCE TO OTHER APPLICATIONS

The U.S. provisional patent applications No. 60/375,215, Melchione et al., entitled, "Software Distribution via Stages"; No. 60/375,216, Huang et al., entitled, "Software Administration in an Application Service Provider Scenario via Configuration Directives"; No. 60/375,176, Vigue et al., entitled, "Fault-tolerant Distributed Computing Applications"; No. 60/375,174, Melchione et al., entitled, "Providing Access To Software Over a Network via Keys"; and No. 60/375,210, Melchione et al., entitled, "Executing Software In A Network Environment"; all filed April 23, 2002, are hereby incorporated herein by reference.

### BACKGROUND

Organizations have become increasingly dependent on computers to maintain high levels of productivity. Administering a large number of computers in an organization can be a burdensome task. The burden is further compounded when the computers are scattered throughout various locations and departments of the organization.

One particularly challenging aspect of computer administration relates to software distribution. Computers may be spread throughout a number of physical locations, and it may be desirable to distribute different software on different computers based on a variety of factors, such as computer type, operating system, user needs, physical location, or department.

Distributing software in a large organization can consume considerable resources due to the logistics of determining which software is appropriate and then distributing it to the proper machines. Software installation in a large organization is thus a burdensome task, and improvements in the field of software installation are needed.

### SUMMARY

One approach to software distribution is to provide the software at a central location from which the software can be downloaded via a network connection. Such an approach benefits from the fact that physical media need not be provided to distribute the software. However, in such a scenario, a bottleneck can develop at the central location. For example, when new software is made available to an organization with a large number of computers, a server may be overloaded as it is called upon to provide the software numerous times in a short period.

The above issues can be problematic whether the software is being distributed to computers on a small network or to an enterprise having thousands of computers spread over multiple locations.

Software can be distributed to administered devices in a network via a distributed server arrangement. For example, if software is requested from an administered device, a reference to a peer administered device can be provided by which the software can be acquired. The peer device can share files it has already downloaded or is currently downloading.

Such an arrangement can be useful, for example, to distribute the load of downloading operations. For example, one or more peer devices can provide software for downloading instead of a data center.

The described technologies can be useful in a scenario in which software has been designated as to be installed at an administered device. For example, a data center may maintain a list of configuration directives for the administered devices, and the configuration directives can include which software is to be installed at which devices. The configuration directives can also include whether an administered device is to provide download functionality (e.g., share files). Requests for software designated as to be installed at an administered device can be fulfilled by providing a reference to a peer administered device from which the software can be acquired.

Various functionality (e.g., communication between administered devices and an application service provider data center) can be provided via an application service provider scenario. The application service provider scenario can be accomplished via an HTTP-based protocol. An administered device can include an agent that periodically queries the application service provider data center to discover which software is designated as to be installed on the node. In this way, software distribution can be accomplished even if the nodes are behind a firewall. For example, if a query comes from an administered device, a response can be sent based on the device's identity and software designated as to be installed at the device.

Upon determining software is designated as to be installed, an agent at an administered device can query a data center to determine from where the software can be obtained. For example, if the software is available at a peer administered device in the same network or organization, the software can be obtained via a peer-to-peer sharing protocol. If software is in the process of being downloaded by a peer node, a requesting node can be deferred until the download is complete.

Administered devices can periodically provide a list of software available at the device for sharing to a data center. The list can be used to populate a database indicating where a software release can be obtained from a peer device (e.g., within the organization or within a network boundary). Queries to the database can be handled via an application service provider scenario.

When a device issues a query for software, the device can be provided with a list of one or more locations from which the software can be obtained. For example, a local device can be placed in the list, or the list can be limited to local devices. The locations can be provided as network references (e.g., Uniform Resource Locators).

A proxy server arrangement can be used to achieve software distribution functions. For example, a proxy server can relay communications to and from a remote data center for other administered devices. Proxy server nodes can assist in software distribution to administered devices that do not have network access to the data center (e.g., an administered device that does not have an Internet connection).

If desired, an application service provider scenario can be used to specify configuration directives controlling which administered devices support software sharing or which administered devices support proxy serving. Any arbitrary administered device can be so designated. Other configurable directives include how often an administered device inquires about software releases or how often administered devices send administered software state information to the data center.

In some embodiments, other software administration tasks can be accomplished via an application service provider scenario. For example, nodes can be placed in groups via an application service provider scenario, and the groups can be associated with a software release via an application service provider scenario.

Additional features and advantages will be made apparent from the following detailed description of illustrated embodiments, which proceeds with reference to the accompanying drawings.

### BRIEF DESCRIPTION OF THE DRAWINGS

Figure 1 is an illustration of an exemplary application service provider scenario.
Figure 2 is an illustration of an exemplary arrangement by which software administration can be accomplished via an application service provider scenario.
Figure 3 depicts an exemplary user interface by which software administration can be accomplished in an application service provider scenario.
Figure 4 illustrates an exemplary business relationship accompanying an application service provider scenario, such as that shown in FIGS. 1 or 2.
Figure 5 shows an exemplary system by which software is distributed via distributed server techniques.
Figure 6 is a flow chart showing an exemplary method of incorporating software functionality into a system by which the software can be administered via an application service provider scenario.
Figure 7 is a flow chart depicting an exemplary method for accomplishing software administration via an application service provider scenario.
Figure 8 is a flow chart depicting an exemplary method for accomplishing a software administration function over a network.
Figure 9 depicts an exemplary scenario in which a vendor hosts application services for more than one organization.
Figure 10 depicts an exemplary distributed sever scenario.
Figure 11 is a flow chart showing an exemplary method of processing configuration directives for administered nodes in a distributed server arrangement.
Figure 12 is a flow chart showing an exemplary method of facilitating the distribution of software among peers on an administered network.
Figure 13 is a flow chart showing an exemplary method of acquiring software in a distributed server arrangement.
Figure 14 is an exemplary arrangement using a central database tracking where software can be obtained on an administered network.
Figure 15 is an exemplary list indicating where software can be obtained.
Figure 16 is an exemplary flow chart showing an exemplary method for sending software information to a data center.
Figure 17 is an exemplary flow chart showing an exemplary method for achieving designated software installation in a distributed server arrangement.
Figure 18 illustrates an exemplary proxy server arrangement.
Figure 19 is a flow chart showing an exemplary method for a proxy server arrangement by which communication with a data center can be achieved by a node without external network access.
Figure 20 is a flow chart showing an exemplary method for achieving a proxy server arrangement.
Figure 21 is an exemplary arrangement showing how agents without external network access communicate with a data center.
Figure 22 is an exemplary arrangement involving anti-virus software.
Figure 23 is a screen shot showing an exemplary user interface for manipulating groups.
Figure 24 is a screen shot showing an exemplary user interface for manipulating policies.
Figure 25 is a screen shot showing an exemplary user interface for manipulating configuration directives related to an agent.
Figures 26A-26J show an exemplary database schema for use with an implementation of technologies described herein.
Figures 27A-27B show another exemplary database schema for use with an implementation of technologies described herein.

### DETAILED DESCRIPTION

### Application Service Provider Overview

The embodiments described herein can be implemented in an application service provider scenario. In particular embodiments, software distribution administration can be accomplished via an application service provider scenario. The described distributed server technologies, proxy server technologies, or both can be achieved via an application service provider scenario.

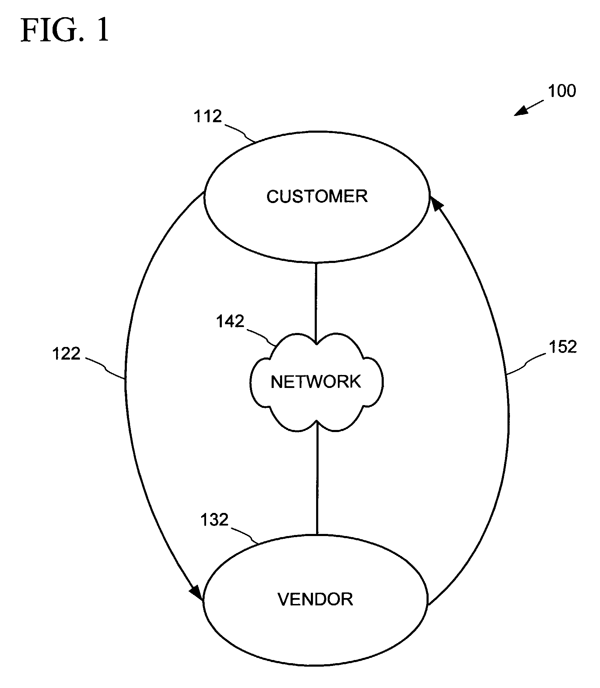

An exemplary application service provider scenario 100 is shown in FIG. 1. In the scenario 100, a customer 112 sends requests 122 for application services to an application service provider vendor 132 via a network 142. In response, the vendor 132 provides application services 152 via the network 142. The application services 152 can take many forms for accomplishing computing tasks related to a software application or other software.

To accomplish the arrangement shown, a variety of approaches can be implemented. For example, the application services can include delivery of graphical user interface elements (e.g., hyperlinks, graphical checkboxes, graphical pushbuttons, and graphical form fields) which can be manipulated by a pointing device such as a mouse. Other application services can take other forms, such as sending directives or other communications to devices of the vendor 132.

To accomplish delivery of the application services 152, a customer 112 can use client software such as a web browser to access a data center associated with the vendor 132 via a web protocol such as an HTTP-based protocol (e.g., HTTP or HTTPS). Requests for services can be accomplished by activating user interface elements (e.g., those acquired by an application service or otherwise) or automatically (e.g., periodically or as otherwise scheduled) by software. In such an arrangement, a variety of networks (e.g., the Internet) can be used to deliver the application services (e.g., web pages conforming to HTML or some extension thereof) 152 in response to the requests. One or more clients can be executed on one or more devices having access to the network 142. In some cases, the requests 122 and services 152 can take different forms, including communication to software other than a web browser.

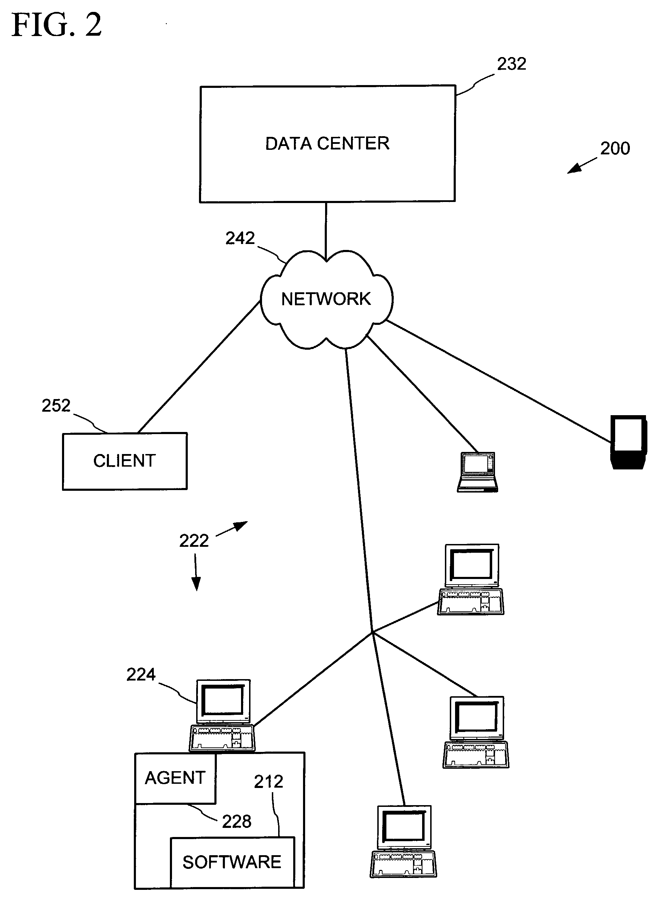

The technologies described herein can be used to administer software (e.g., one or more applications) across a set of administered devices via an application service provider scenario. Administration of software can include software installation, software configuration, software management, or some combination thereof. FIG. 2 shows an exemplary arrangement 200 whereby an application service provider provides services for administering software (e.g., administered software 212) across a set of administered devices 222. The administered devices 222 are sometimes called "nodes."

In the arrangement 200, the application service provider provides services for administrating instances of the software 212 via a data center 232. The data center 232 can be an array of hardware at one location or distributed over a variety of locations remote to the customer. Such hardware can include routers, web servers, database servers, mass storage, and other technologies appropriate for providing application services via the network 242. Alternatively, the data center 232 can be located at a customer's site or sites. In some arrangements, the data center 232 can be operated by the customer itself (e.g., by an information technology department of an organization).

The customer can make use of one or more client machines 252 to access the data center 232 via an application service provider scenario. For example, the client machine 252 can execute a web browser, such as Microsoft Internet Explorer, which is marketed by Microsoft Corporation of Redmond, Washington. In some cases, the client machine 252 may also be an administered device 222.

The administered devices 222 can include any of a wide variety of hardware devices, including desktop computers, server computers, notebook computers, handheld devices, programmable peripherals, and mobile telecommunication devices (e.g., mobile telephones). For example, a computer 224 may be a desktop computer running an instance of the administered software 212.

The computer 224 may also include an agent 228 for communicating with the data center 232 to assist in administration of the administered software 212. In an application service provider scenario, the agent 228 can communicate via any number of protocols, including HTTP-based protocols.

The administered devices 222 can run a variety of operating systems, such as the Microsoft Windows family of operating systems marketed by Microsoft Corporation; the Mac OS family of operating systems marketed by Apple Computer Incorporated of Cupertino, California; and others. Various versions of the operating systems can be scattered throughout the devices 222.

The administered software 212 can include one or more applications or other software having any of a variety of business, personal, or entertainment functionality. For example, one or more anti-virus, banking, tax return preparation, farming, travel, database, searching, multimedia, security (e.g., firewall), and educational applications can be administered. Although the example shows that an application can be managed over many nodes, the application can appear on one or more nodes.

In the example, the administered software 212 includes functionality that resides locally to the computer 224. For example, various software components, files, and other items can be acquired by any of a number of methods and reside in a computer-readable medium (e.g., memory, disk, or other computer-readable medium) local to the computer 224. The administered software 212 can include instructions executable by a computer and other supporting information. Various versions of the administered software 212 can appear on the different devices 222, and some of the devices 222 may be configured to not include the software 212.

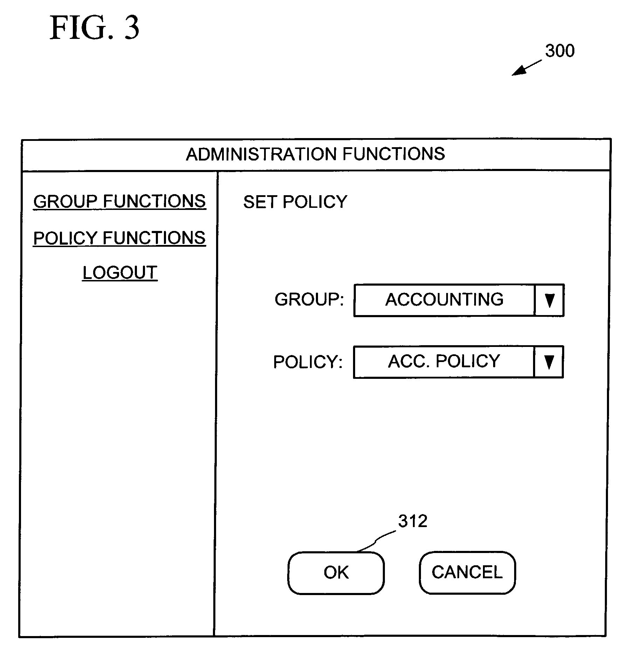

FIG. 3 shows an exemplary user interface 300 presented at the client machine 252 by which an administrator can administer software for the devices 222 via an application service provider scenario. In the example, one or more directives can be bundled into a set of directives called a "policy." In the example, an administrator is presented with an interface by which a policy can be applied to a group of devices (e.g., a selected subset of the devices 222). In this way, the administrator can control various administration functions (e.g., installation, configuration, and management of the administered software 212) for the devices 222. In the example, the illustrated user interface 300 is presented in a web browser via an Internet connection to a data center (e.g., as shown in FIG. 2) via an HTTP-based protocol.

Activation of a graphical user interface element (e.g., element 312) can cause a request for application services to be sent. For example, application of a policy to a group of devices may result in automated installation, configuration, removal, updating monitoring or management of indicated software for the devices in the group.

In the examples, the data center 232 can be operated by an entity other than the application service provider vendor. For example, the customer may deal directly with the vendor to handle setup and billing for the application services. However, the data center 232 can be managed by another party, such as an entity with technical expertise in application service provider technology.

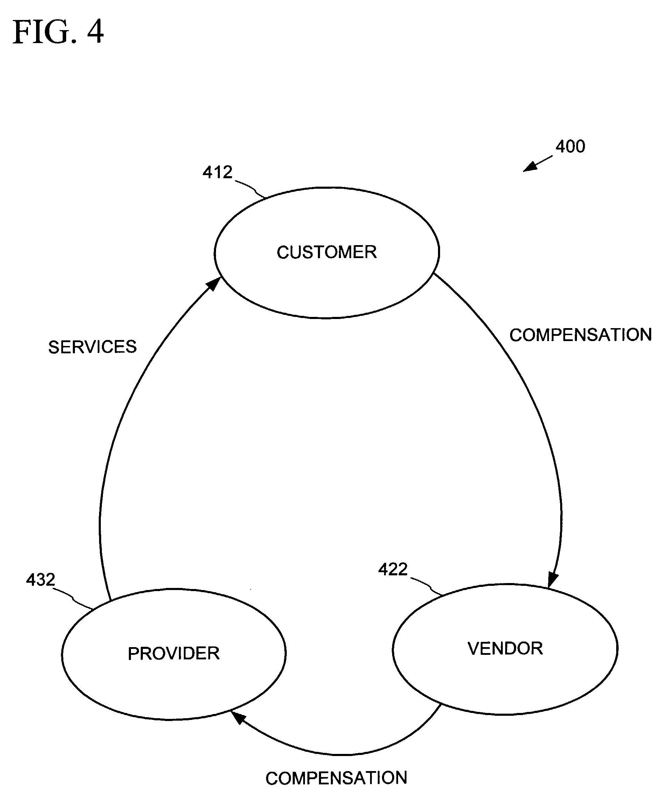

The scenario 100 (FIG. 1) can be accompanied by a business relationship between the customer 112 and the vendor 132. An exemplary relationship 400 between the various entities is shown in FIG. 4. In the example, a customer 412 provides compensation to an application service provider vendor 422. Compensation can take many forms (e.g., a monthly subscription, compensation based on utilized bandwidth, compensation based on number of uses, or some other arrangement (e.g., via contract)). The provider of application services 432 manages the technical details related to providing application services to the customer 412 and is said to "host" the application services. In return, the provider 432 is compensated by the vendor 422.

The relationship 400 can grow out of a variety of situations. For example, it may be that the vendor 422 has a relationship with or is itself a software development entity with a collection of application software desired by the customer 412. The provider 432 can have a relationship with an entity (or itself be an entity) with technical expertise for incorporating the application software into an infrastructure by which the application software can be administered via an application service provider scenario such as that shown in FIG. 2.

Although not shown, other parties may participate in the relationship 400. For example, network connectivity may be provided by another party such as an Internet service provider. In some cases, the vendor 422 and the provider 432 may be the same entity. It is also possible that the customer 412 and the provider 432 be the same entity (e.g., the provider 432 may be the information technology department of a corporate customer 412).

### Example 1 - Exemplary System Overview

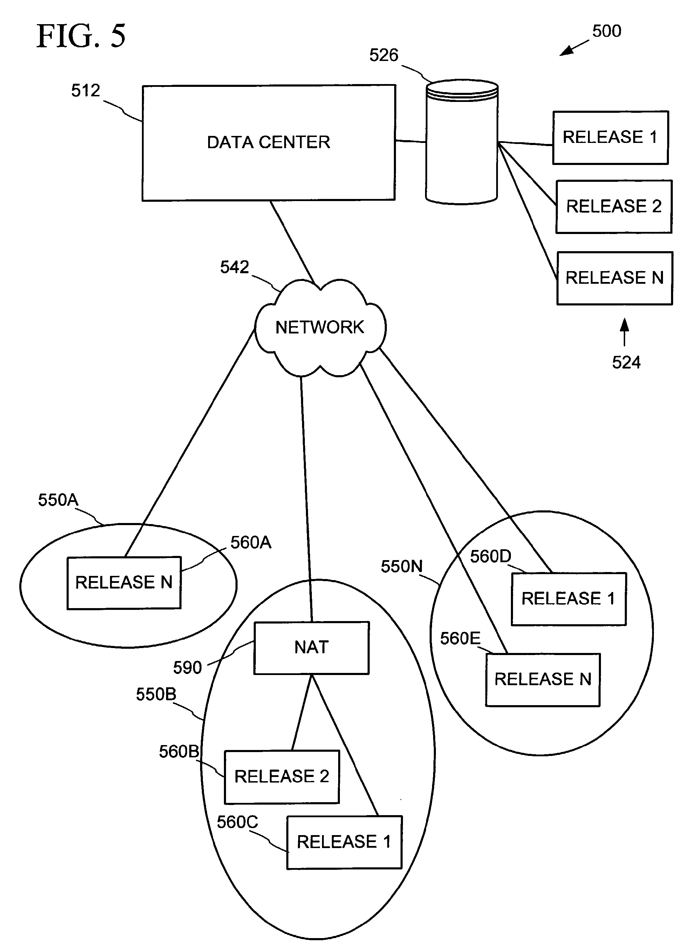

FIG. 5 depicts an overview of an exemplary system 500 by which software can be distributed. In the arrangement, a data center 512 keeps a record of software 524 in a database 526 which can be released to nodes in a network. A software release can be distributed via a network 542 (e.g., the Internet), to various sites (e.g., the sites 550A, 550B, and 550N), which may be associated with a particular customer or customers.

In the example, nodes at the site 550B access the data center 512 via a network address translation device 590 (e.g., a proxy server, firewall, or network switch that translates network addresses). The nodes 560B and 560C may use private network addresses. Such an arrangement may be used to enhance the security of the nodes 560B and 560C or to provide network connectivity to a number of nodes even though only a few (e.g., one) network addresses are provided to access the network 542.

Different software releases may appear at different sets of nodes within the system 500. In the example, a set of nodes 560A is distributed release *n*, some nodes 560B at site 550B are distributed release 2, while other nodes 560C at the same site are distributed release 1. At site 550C, some nodes 560D are distributed release 1, while others 560E are distributed release *n*. It may take time for a release to percolate through the system after it is released, so a set of machines may have a mixture of releases. Further, the releases may be tailored to specific circumstances (e.g., operating system, whether distributed server functionality is to be provided, and the like).

For a node or group of nodes, a release can be a first time installation of software, an update of existing administered software, a configuration of administered software, a varied feature set of administered software, an added function for administered software, an exchange of administered software, an extension of an automated administered software license, a removal instruction(s) for administered software, or other software-like life-cycle functions.

Distribution of the releases can be accomplished in any number of ways. For example, in a scenario supporting software administration, an administrator can specify which nodes are to receive which releases. Automated processing can then handle the details of distributing the software to the appropriate nodes. To relieve network congestion, the releases 524 may reside at a location other than the data center 512, and the data center 512 can provide a reference (e.g., an URL) to the releases 524 to accomplish release distribution.

Further, as described herein, nodes can be designated to provide software to other peer nodes within a network. Also, nodes can be designated to serve as proxy servers for software distribution setup communications with the data center 512. For example, a node not having access to the network 542 can communicate with the data center 512 via a proxy server node to determine which releases are appropriate for the node and from where the releases can be obtained.

To facilitate file sharing, any of the nodes can include web server functionality. Thus, nodes can acquire software via an URL referring to another node (e.g., specifying an IP address). Such web server functionality can be acquired via the software distribution process described herein.

Accordingly, distribution can be handled automatically when a release is made available to the system. In this way, administration of the software can be greatly improved, and system administrators can avoid the burden of software distribution.

The illustrated system can use the Internet for the network 542. Also, administration can be performed via an application service provider (or "ASP") scenario (e.g., via the Internet or some other network).

### Example 2 - Incorporating Software Functionality into an ASP Scenario

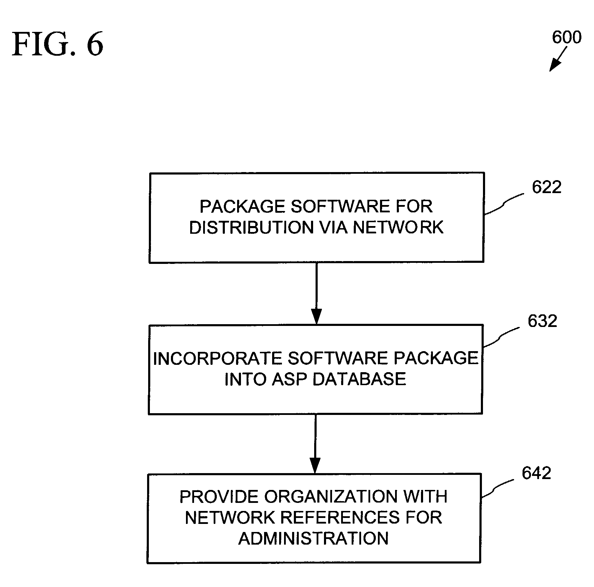

In some cases, it may be desirable to take an arbitrary piece of software and incorporate it into a system by which the software can be administered via an application service provider scenario. FIG. 6 is a flow chart showing a method 600 for accomplishing such an arrangement. The method 600 can be performed by the developer of the software or an entity specializing in application service provider scenarios which works in tandem with the software developer.

At 622, the software is packaged for distribution over a network. For example, software components and an installation program can be assembled into a package (e.g., according to the .CAB file specification of Microsoft Corporation).

At 632, the software package is incorporated into a database maintained by the application service provider (e.g., the database 526). The software package itself may reside at a separate location, and a reference to the package can be incorporated into the database.

At 642, the organization wishing to avail itself of software administration via the application service provider scenario is provided with appropriate network references (e.g., URL's) by which the organization can access the application services for administering the software throughout its locations.

As described below, the network references can be sufficient for accomplishing administration via an application provider service scenario. For example, an administrator can configure a network so that software can be distributed as described herein via the network references. In this way, distribution of software via conventional media (e.g., diskettes or CD's) can be avoided.

### Example 3 - Application Service Provider Scenarios

Providing software administration services via an application service provider scenario can be challenging because typical network connections include security measures that inhibit various functionality. For example, while it may be possible to install software to a remote machine, doing so over the Internet is typically not possible because organizations employ a firewall by which certain directives originating outside the firewall are not allowed to arrive at machines inside the firewall.

One way to accomplish administration via an application service provider scenario is to use a protocol which has been designated as relatively safe and is typically allowed to pass through the firewall (e.g., an HTTP-based protocol). Some functions related to administration can be accomplished in other ways, such as via distribution of programs embedded in or referred to within relatively safe protocols (e.g., a control conforming to the ActiveX specification of Microsoft Corporation embedded in a web page). Other arrangements are possible. For example, in a scenario in which the application service provider (e.g., an IT department) maintains a data center within the firewall, other protocols may be used. However, an HTTP-based protocol can also be used in such a scenario.

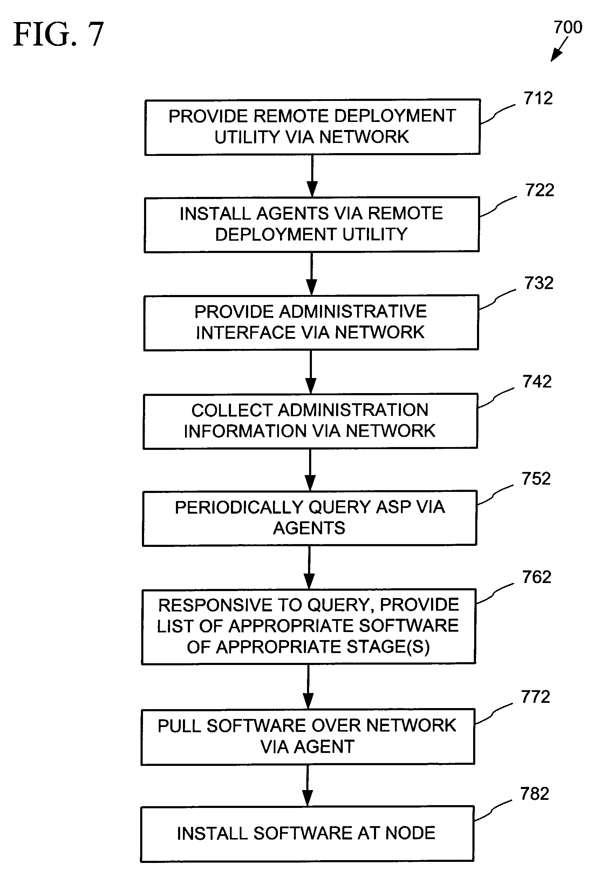

FIG. 7 shows an exemplary method 700 for accomplishing software administration via an application service provider scenario. At 712, a remote deployment utility (e.g., with push functionality) is provided via a network reference (e.g., an URL). For example, the network reference can refer to a location (e.g., a web server) maintained by an application service provider, and an administrator can acquire the remote deployment utility via the location. The remote deployment utility can then be installed behind the firewall so that an administrator can direct installation of appropriate software at nodes within the network (e.g., behind the firewall).

At 722, agent software is installed at nodes to be administered via the remote deployment utility. For example, an administrator can select a list of nodes at which the agent software is to be installed, and the remote deployment utility sends the software to the nodes and arranges for it to be installed at the nodes over a network connection (e.g., without having to physically visit the nodes).

At 732, an administrative user interface is provided via a network reference. For example, the network reference can refer to a location (e.g., a web server) maintained by an application service provider. The administrative user interface can provide a variety of functions by which an administrator can administer software at administered nodes, including distributing software via the distributed server and proxy server techniques as described herein.

At 742, administration information is collected from an administrator via the network. For example, various web pages can be presented by which an administrator selects various options and configuration directives. The options and configuration directives can include placing nodes into named groups and associating the named groups with a software stage. The directives can also include designating a node as a distributed server or as a proxy server. The user interface and administration information can be communicated via an HTTP-based protocol. Accordingly, the information can pass through a firewall.

At 752, the agent software at the administered nodes periodically queries the application service provider (e.g., a data center) to determine what configuration directives need to be carried out at the node. The queries and returned information can be communicated via an HTTP-based protocol. Accordingly, the information can pass through a firewall.

In the case of software distribution, the application service provider can provide a list of software (e.g., listing a software package containing software of a stage as designated by the administrator) that should reside at the node at 762 in response to a query by an agent.

At 772, the agent can pull down the appropriate software (e.g., a software package) and install it at the node 782.

In the case of an application service provider scenario using the Internet, software administration can thus be accomplished from any device having access to the Internet. Thus, a network behind a firewall can be administered via the Internet, even by an administrator employing a device (e.g., a web browsing computer) outside the firewall.

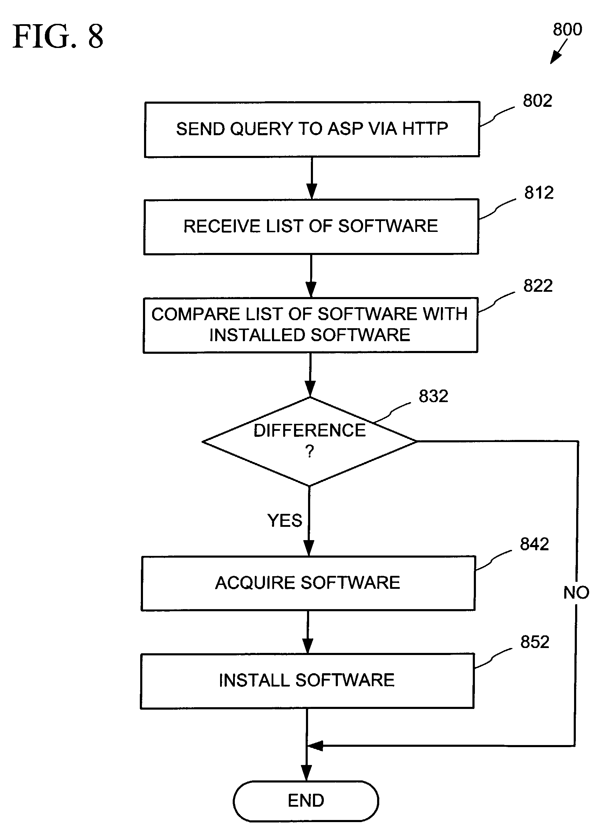

FIG. 8 depicts an exemplary method 800 for accomplishing a software administration function over a network. In the example, software of an appropriate stage is provided to a node behind a firewall. However, other arrangements are possible, such as providing software within the firewall.

At 802, an HTTP-based protocol request is sent to an application service provider (e.g., a web server at a data center). For example, an agent can send a GET or POST request by which certain parameters can be placed in the request. For instance, a node identifier can be passed to the server. The request can be periodically generated (e.g., according to 752 of FIG. 7). The frequency of the request can be controlled by an administrator via manipulation of web pages.

At 812, in response to the request, the server provides a list of software that should be installed at the requesting node. The list can be generated with reference to the stage information for the node. For example, if the node belongs to a group designated to receive software of stage 2, a list of such software can be provided. A distribution threshold can also be taken into account.

At 822, the list of software provided is compared with the software installed on the node (e.g., by the agent).

At 832, it is determined whether there are any differences between the list and the software installed on the node. If there are no differences, processing for software distribution can end. Other processing may be appropriate for carrying out additional configuration directives (e.g., adjusting the periodic request interval).

If it is determined that there are differences, the software is acquired at 842 and installed at 852. The software may be acquired in a variety of ways, such as via an HTTP-based protocol. For example, the software may reside at a server maintained by the application service provider, at a mirror site, or at a location within the network (e.g., behind the firewall) if desired.

The list can be interpreted so that software not appearing in the list is uninstalled from the node (e.g., by the agent). Old software distribution units may be retained so they can be provided to other nodes (e.g., in a peer-to-peer arrangement).

Although administration can be accomplished via an application service provider scenario as illustrated, functionality of the software being administered need not be so provided. For example, a hybrid situation may exist where administration and distribution of the software is performed via an application service provider scenario, but components of the software being administered reside locally at the nodes.

### Example 4 - Software Distribution Over Many Enterprises

In some situations, it may be desirable for one vendor to host application services for more than one organization. For example, a vendor can host a plurality of customers to avoid having a data center for each customer, to avoid having to hire separate staff for each customer, or to otherwise reduce the cost of providing the services. The technologies described herein can be implemented in such a scenario.

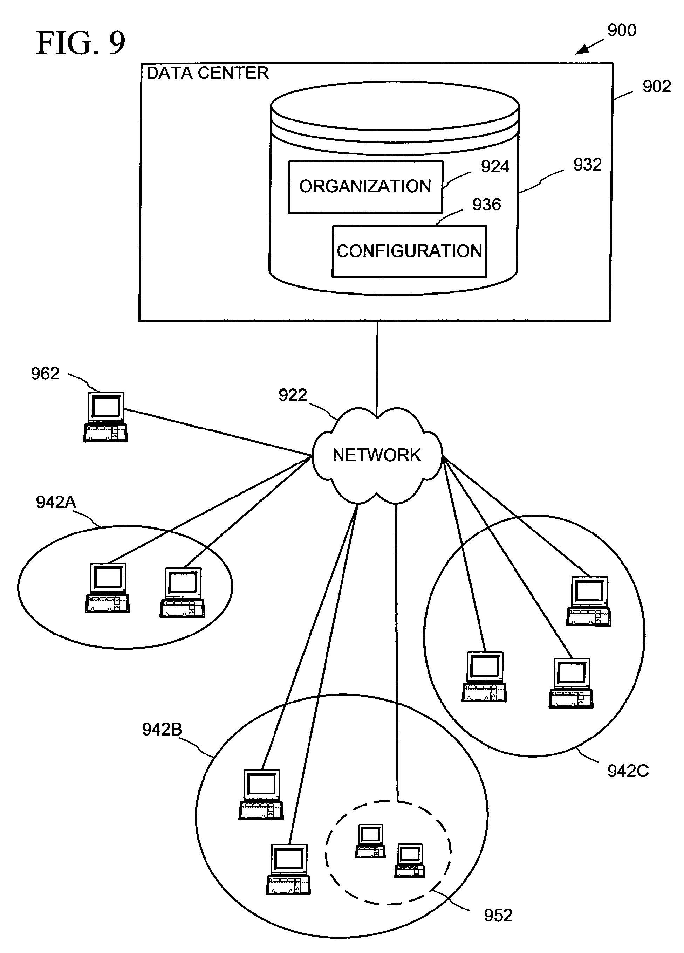

FIG. 9 depicts an exemplary scenario 900 in which a vendor hosts application services for more than one customer. The vendor can act as an application service provider or delegate the hosting responsibilities to another entity if desired. Also, it is possible for one application service provider to provide services for a plurality of vendors. It is also possible for the pictured scenario 900 to be applied to a single organization (e.g., departments or geographical locations can be considered sub-organizations within such an organization).

In the example, a data center 902 can include a variety of hardware and software (e.g., web servers) for processing requests from a variety of nodes via the network 922. The network 922 may be the Internet or some other network. In the case of the Internet, there may be one or more firewalls between the data center 902 and the nodes administered.

The data center 902 can include a database 932 that has an organization table 934 and one or more configuration tables 936. In this way, the database 932 can track which nodes belong to which organization (e.g., via a nodes table) and the configuration appropriate for the nodes. Various other tables can also be included (e.g., a groups table). In some cases, an organization may be sensitive to having its information commingled with other organizations, so a separate table, a separate database, a separate server, or a separate data center 902 can be maintained for such organizations, if desired.

As shown, three organizations 942A, 942B, and 942C are availing themselves of the services provided by the application service provider via the data center 902 over the network 922. Within the organization, nodes can be associated into groups or sub-nets (e.g., the group 952). Administration can be accomplished by an administrator accessing the data center 902 (e.g., via an HTTP-based protocol) from within the respective organization, group, or sub-net.

It is also possible that the organizations be administered by yet another entity via another computer 962. For example, a consulting firm can perform software administration functions for the three organizations by accessing web pages over the Internet. The initial installation of agents to the nodes may be challenging in a situation where no administrator is behind the organization's firewall, but such installation can be accomplished by emailing an appropriate hyperlink to a user at the node. When activated, the hyperlink can install the appropriate agent software.

Distribution of software via stages as described herein can be administered via any of the illustrated scenarios. For example, an administrator inside or outside of an organization can access the data center 902 to manipulate configuration settings designating nodes be distributed software of an appropriate stage. Security measures can be put into place to prevent unauthorized manipulation of configuration settings.

### Example 5 - Exemplary Peer Nodes

Peer nodes can include nodes within any network boundary. For example, a set of peer nodes may be those able to access a particular server to request network services. Or, peer nodes may be those within a particular network domain, within a particular sub-net, behind a network address translator, or within a particular organization (e.g., a customer). Peer-to-peer file sharing can be accomplished when a peer computer provides file sharing services, even if the peer computer is not a dedicated file server. Such services can be provided on a limited basis so that a peer computer is not overwhelmed by requests from other peers. Alternatively, a network peer can be dedicated to file sharing.

An exemplary peer-to-peer file sharing arrangement is one in which a set of peer computers are used by users to complete various tasks related to an application (e.g., word processing). In addition to performing the application tasks, one or more of the peer computers can be designated as providing file services to one or more of the other peer computers. In the examples described herein, any of the computers being administered can be designated as a file sharing computer. If desired, file sharing can be enabled by default.

Network boundaries need not parallel physical boundaries. For example, two sets of computers at remote locations may be linked via a high speed link and provide peer-to-peer file sharing among them more efficiently than two computers in the same room linked via a slower connection.

### Example 6 - Exemplary Distributed Server System

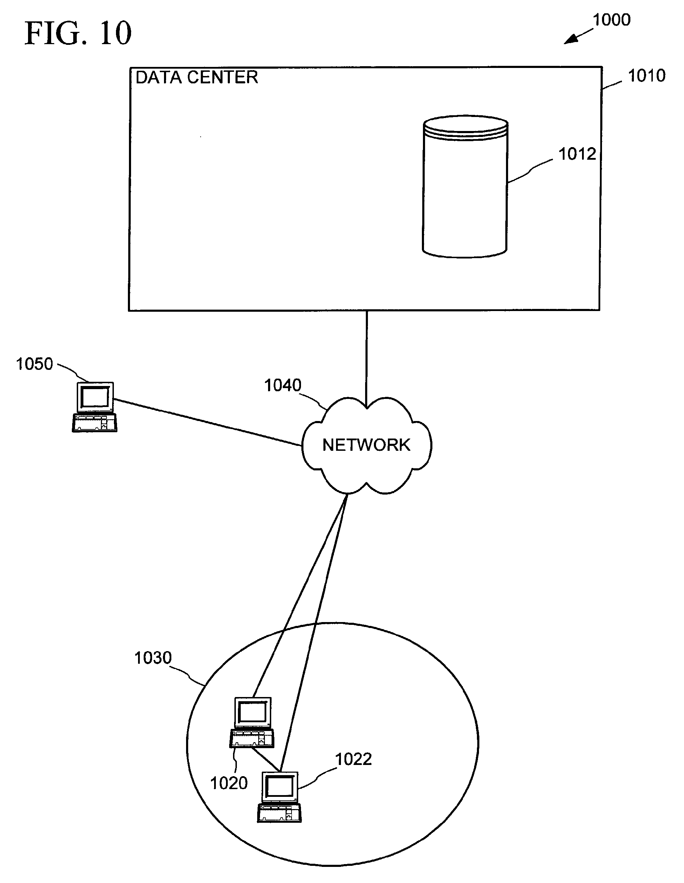

FIG. 10 depicts an exemplary system 1000 in which distributed server techniques can be employed. In the example, a data center 1010 maintains a database 1012 indicating software designated as to be installed at one or more administered devices (e.g., the nodes 1020 and 1022) in the sub-net 1030 (e.g., a customer's network).

The software designations in the database 1012 can be configured over a network 1040 (e.g., the Internet) via a computer 1050 operated by an administrator (e.g., in an application service provider scenario). Further, a configuration directive can be sent to the data center 1010 to indicate that the node 1020 is to provide distributed server functionality (e.g., share files with other nodes to accomplish software distribution from the data center 1010). The computer 1050 can be within the sub-net 1030 or outside the sub-net 1030 as shown.

One of the nodes 1020 can interact with the data center 1010 to obtain software (e.g., a particular release of an application or other software). The data center 1010 can track the fact that the node 1020 has the software. Subsequently, when a peer node such as the node 1022 requests the same software, a reference to the node 1020 can be provided so that the node 1022 can acquire (e.g., download) the software from the node 1020.

In some cases, it may be that the node 1020 is in the process of acquiring the software. Accordingly, the node 1022 can be instructed to wait until the acquisition is completed. The node 1022 can then wait and request the software at a later time and be provided a reference to the node 1020.

To facilitate sharing of the software between the nodes 1020 and 1022, the node 1020 can maintain the software in a distribution-friendly format (e.g., a .CAB, .ZIP, or .SEA file) after the node 1020 has installed the software. In this way, a request for the software by the node 1022 can be met by providing software in the distribution-friendly format. Requests from peer nodes (e.g., via URLs) can be processed by an agent at a node (e.g., via an HTTP-based protocol) or according to a file sharing feature in the node's operating system.

During interaction between a node 1020 and the data center 1010, information sufficient to determine whether nodes are local to (e.g., on the same sub-net as or behind the same network address translator as) the node 1020 can be collected. For example, a sub-net mask or range of addresses can be collected. It can then be determined whether another node (e.g., the node 1022) is local (e.g., on the same sub-net or behind the same network address translator). Requests for software can then be answered by providing a list of one or more nodes, including a reference to another local node (e.g., in the same sub-net 1030 or behind the same network address translator).

Configuration of the software designations and processing requests to the data center 1010 by nodes can be achieved via an application service provider scenario. For example, an HTTP-based protocol can be used.

### Example 7 - Exemplary Distributed Server Techniques with Central Database

Many nodes may be administered via the technologies described herein. In a distributed server arrangement, software requested by one node may already be present at another node. Software can be shared among any of the nodes, or sharing can be limited in some way (e.g., limited to nodes of the same customer via an organization identifier or limited to local nodes).

A central database can be provided to maintain information that facilitates software sharing between the nodes. In such a case, an agent running on a node can query the central database and determine other nodes on the customer's network (e.g., a sub-net) already having the desired software. The nodes can then obtain the software therefrom (e.g., via peer-to-peer file sharing on the customer's administered network) thereby distributing the software serving load. Such a scenario can reduce serving loads, for example, on the data center and or other software servers.

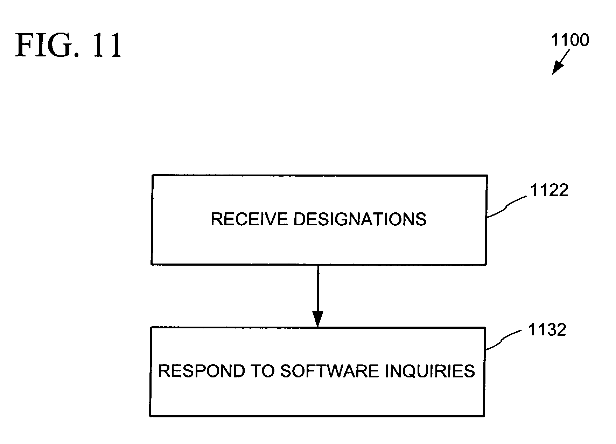

FIG. 11 shows an exemplary method 1100 for processing configuration directives (e.g., software designations) for administered nodes in a distributed server arrangement. The method can be performed by a data center (e.g., the data center 902 of FIG. 9).

At 1122, a data center receives a designation of software to be distributed to administered nodes from a computer operated by a software administrator (e.g., over a network connection such as the Internet). The designation can be received via an application service provider scenario. The designation may also indicate software for distribution to groups of nodes in an administered network. For example, a particular software release or stage can be specified.

At 1132, the data center interacts with an agent on a node on the administered network to determine that a particular software release is to be installed at the node. For example, the interaction can include a request for a list of software that is to be installed or a request for a particular software release. During the interaction, if software is designated as to be installed but is not yet installed at the node, the data center can respond indicating a location at which the node can acquire the software. The location can refer to a peer node and may be limited to local nodes. Upon receiving the response, the agent can obtain and install the software release indicated.

For example, after software has been downloaded (e.g., from the data center or other server facilitated by the data center) to one or more nodes on the administered network, the data center can maintain a central database which indicates whether and where the software can be obtained on the administered network. In such a scenario, the central database can be populated with data about locations at which the software can be obtained (e.g., downloaded). Agents can then request information indicating where software can be obtained from other nodes on the administered network (e.g., peers on the administered network).

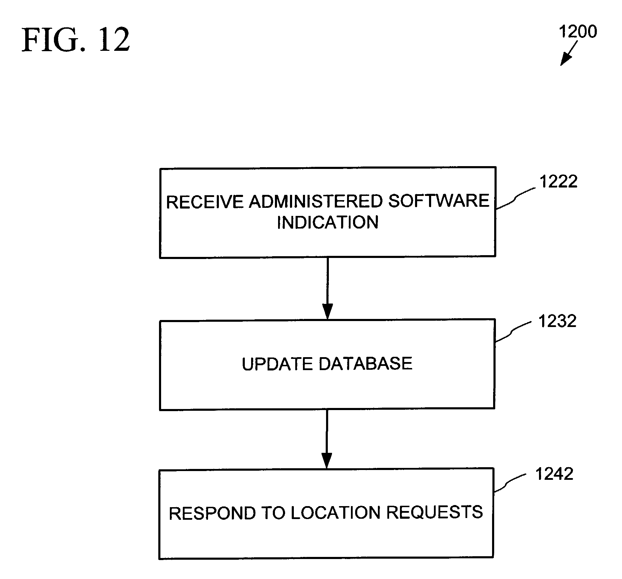

FIG. 12, shows an exemplary method 1200 for facilitating software distribution among peer nodes (e.g., nodes on an administered network). The method can be performed by a data center (e.g., the data center 902 of FIG. 9).

At 1222, the data center receives information from an agent indicating what software the agent has available for distribution to peer nodes. Information can also be collected sufficient to determine whether other agents are local (e.g., on the same sub-net or behind the same network address translator as the agent). For example, information can be collected that indicates the extent of the sub-net in which the agent operates and whether the agent is behind a network address translator (e.g., a proxy server or firewall).

At 1232, the data center updates a database with information identifying the software administered by the agent and an associated agent or node identification. The database can also include the other collected information.

At 1242, the data center receives and responds to an agent's request. The response can indicate where software can be obtained from another node. The response may indicate a list of more or more peer nodes where software can be obtained. The list can be limited to those nodes local to (e.g., in the same sub-net or behind the same network address translator as) the requesting agent.

Upon receiving the indication of where software can be obtained from another node, an agent can obtain and install the software. In some cases, a software release designated for a node may not be present on local nodes, or a reference may be invalid (e.g., a machine may be turned off). In such a case the node's agent can try other nodes in a provided list or obtain the software from the data center or other location (e.g., a mirror site) indicated by the data center.

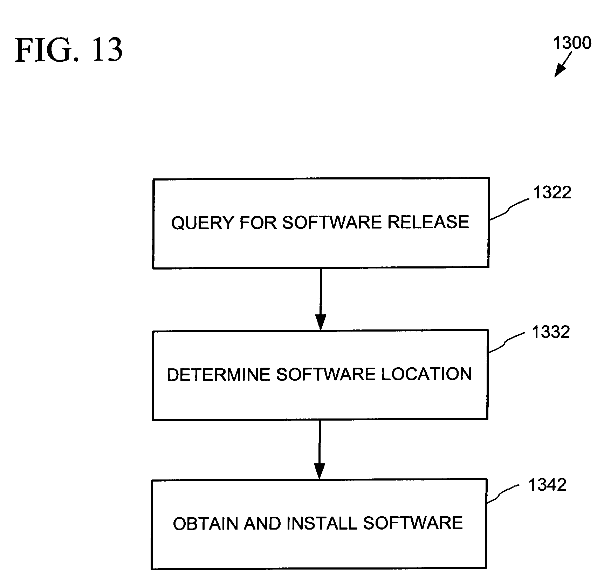

FIG. 13 shows an exemplary method 1300 for acquiring software in a distributed server arrangement. The method can be performed by an agent at a node to facilitate software sharing among nodes on an administered network.

At 1322, the agent queries the data center in order to determine whether software is designated for release to the node where the agent is running. The agent can be configured to periodically query the data center for software release information. Upon determining that software is designated for release, the agent can next determine a location from where the software can be obtained.

At 1332, the agent queries the data center in order to determine where software can be obtained. The response can indicate one or more locations from where software can be obtained (e.g., any node administered by the data center at any organization, the data center itself, or any server indicated by the data center). For example, the response can indicate a location at a local peer node (e.g., in the customer's administered network).

At 1342, the agent obtains the software from one of the locations indicated (e.g., a peer node). The agent then installs the software.

### Example 8 - Determining Software to be Installed at a Node

Various methods can be used for determining which software is to be installed at a node. For example, an agent can send a request to a data center for a list of the software to be installed at the node. The agent can then compare the software on the list with that already installed at the node.

Responsive to determining that there is software to be installed but not yet installed at the node, the agent can then request the software from the data center. The data center can respond by providing a reference to a location at a peer node from which the software can be obtained.

In some cases, there may be more than one piece of software that is requested, and various pieces may be scattered at various peer nodes, or the node may obtain one or more pieces from a location other than a peer node.

The determination can be achieved in other ways. For example, responsive to a request for software, the data center can provide the locations without waiting for a subsequent request. Also, the data center could compare an agent-provided list of software installed at the agent device with software to be installed.

Further, the determining need not be performed or may be a cursory determination if desired. For example, it might be assumed that certain software is to be obtained without collecting information about the software to be obtained.

### Example 9 - Exemplary Implementation of a Distributed Server Arrangement Using a Central Database

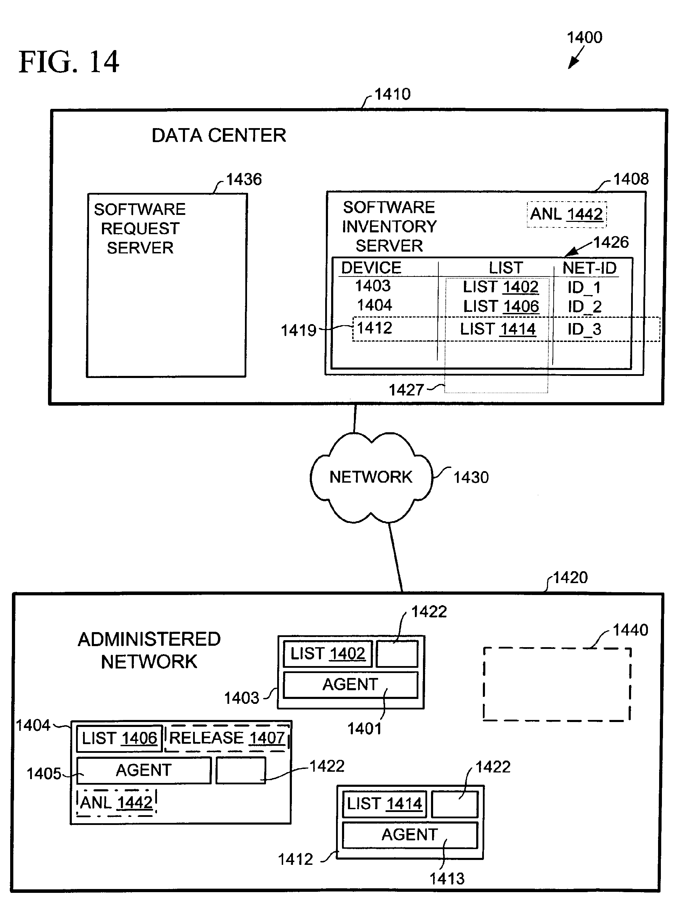

A central database can be employed to enable agents to obtain software from other agents. FIG. 14 shows a distributed server arrangement 1400 by which software 1422 can be administered on a network 1420 of administered devices (e.g., networked computers) 1403, 1404, and 1412. A designation can be made (e.g., via an application service provider scenario) by which the administered devices 1403, 1404, and 1412 are designated (e.g., by an administrator) to automatically receive releases of the administered software 1422 as facilitated by a data center 1410 through a network 1430 (e.g., the Internet).

Software designated as to be installed at one administered device (e.g., the node 1412), may already reside at another administered device (e.g., the node 1403). There may be devices on the organization's network 1440 that have no software being administered by the data center, and some software on an administered device may not be administered via the data center. The software 1422 administered at an administered device (e.g., device 1403) need not be the same software administered for other administered devices (e.g., the devices 1404, 1412). Further, even when two administered devices do have any portion of the same software being administered (e.g., a same application), that portion of software may have different versions, stages, or releases under administration. For example, one of the two administered devices (e.g., 1403) may be configured to receive "Beta" releases for the specific application, while the other administered device (e.g., 1412) may be configured to receive "Live" releases for the specific application.

To designate any of the nodes as a distributed server node, an administrator can provide a configuration directive (e.g., via an application service provider scenario) to the data center 1410. Upon the next communication with the data center 1410, the agent at a node so designated is directed to begin providing distributed server functionality. The arrangement 1400 can be configured so that nodes operate provide distributed server functionality by default.

In the example, the nodes 1403, 1404, and 1412 have been designated as distributed server nodes. Accordingly, they assemble lists of software 1406, 1402, and 1414 available to them. The lists can then be sent by the agents to the data center 1410. For example, lists can be sent upon completion of software installation by an agent. Alternatively, lists can be sent periodically to reflect the dynamic nature of the software present at an administered device. For example, software in a distribution-friendly format may have been deleted to reclaim disk space at an administered device. A periodic update can reflect that the software is no longer available at the node from which it has been deleted.

The lists are received and processed by the data center 1410. For example, a software inventory server 1408 can maintain a database indicating locations at which software is available. In the example, a database table 1426 associates an administered device with a list of software for querying by administered devices. Alternatively, a different tracking method can be used by a different server or servers.

The data center 1410 can also collect sufficient information by which it can determine whether a node should be provided as a sharing node for another requesting node. For example, information can be collected to determine whether nodes are local to each other (e.g., whether the nodes are on the same sub-net or behind the same network address translator or firewall). For example, the agent can also send information reporting a network address (e.g., an IP address from a network card) assigned to the node. The network address may be valid on the Internet, but it need not be (e.g., it may be for a private network). The agent can also send a sub-net mask. When the information is received by the data center 1410, it can also determine a "received-from" network address (e.g., an IP address). The data can be recorded in the table 1426 or otherwise recorded.

In the example, a database table row 1419 associates an administered device identifier 1412 (e.g., a GUID) with an administered software list 1414 and a network address ID_1 (e.g., a reported network (e.g., IP) address). The software inventory server 1408 updates the table 1426 as it receives software lists (e.g., periodically) from agents. Because administered devices on the administered network 1420 do not necessarily contain the same administered software, nor is a release necessarily available or requested by agents at the same time, the given lists 1427, may differ. Instead of using the lists as shown, a database can instead track which software is available at which administered devices without regard to maintaining the lists in the database.

During interaction between the data center 1410 and an administered device, it may be determined that software to be installed at the administered device can be obtained from another administered device on the administered network (e.g., directly from a peer device). For example, an agent 1404 using periodic communication requests (e.g., HTTP-based, SOAP-based, FTP-based, etc) to a software request server 1436 at the data center 1410, receives from the server, an indication that a software release is designated (e.g., via a configuration directive) as to be installed by the agent. The software request server 1436 and software inventory server 1408 may be on different machines, combined on the same machine, or logically separated.

As a result of interaction between the data center 1410 and an administered device 1404 to determine what software is to be installed but not yet installed at the administered device 1404, a list 1407 of software to be obtained is constructed. The list can specify one or more releases or pieces of software (e.g., .CAB, .ZIP, or .SEA files) to be obtained by the agent 1405.

The agent 1405 then obtains the software on the list 1407. First, the agent 1405 makes a communication request (e.g., HTTP-based, SOAP-based, FTP-based, etc.) to the software inventory server 1408 to find locations whereat software on the list 1407 can be obtained.

The software inventory server 1408 can construct an appropriate response by consulting database tables (e.g., the table 1426) to find nodes from which the software can be obtained. For example, the nodes can be chosen based on whether two nodes are local (e.g., on the same sub-net or behind the same network address translator or firewall).

To determine whether two nodes are on the same sub-net or behind the same network address translator or firewall, a variety of techniques can be used. For example, it can be determined that a node is behind a network address translator or firewall if the network address reported by an agent does not match the "received-from" network address of the communications from the agent. In such a case, a network address translator (e.g., a proxy server or firewall) is apparently translating the network address during communications between a node and the data center 1410. If the "received-from" network address matches for two such nodes, it can be assumed that they are behind the same network address translator (e.g., the nodes are local to each other). Accordingly, requests for software by one node behind the network translator can be fulfilled by providing a list of one or more nodes also behind the same network translator. The provided list can list the network address assigned to (i.e., reported by) the reporting node (e.g., ID_1) so that the requesting node can obtain software directly therefrom.

If the network address reported by an agent does match the "received-from" network address of the communications from the agent, a different approach can be taken. For example, the size (e.g., range of addresses) of the sub-net on which the agent operates can be determined. If a requesting node is within the same sub-net as a reporting node (e.g., the nodes are local to each other), the reporting node can be included in responses to the requesting node.

For example, based on a sub-net mask and a network address (e.g., IP address), the range of addresses within the sub-net can be determined. Database tables (e.g., the database table 1426) can be consulted to find other nodes within the same sub-net (e.g., in the range of addresses). The nodes can be provided in list form, including the network address of the node (e.g., reported by the sharing node) by which the software can be obtained.

As described, the software inventory server 1408 returns a list of one or more locations where software (e.g., in the list 1407) can be obtained on the administered network 1420. For a given software release, the list may indicate several places (e.g., peer administered devices) where the software can be obtained.

If software in the list 1407 can be obtained by the agent 1405 from another administered device 1403, 1412 on the administered network, or from another location identified by the central database, then a network traffic bottleneck at the data center 1410 can be reduced. The available bandwidth on the customer's network 1420 may be greater than the bandwidth over a shared network 1430 (e.g., Internet). Also, the shared network bandwidth may be more expensive. Accordingly, obtaining software on the administered network via a distributed server arrangement as shown can be more efficient and less costly.

Of course, the release list 1407 may indicate software not available on the administered network, and this software can be downloaded from the data center 1410 or some other location such as a mirror site. Additionally, an installation script used by the agent to install the software may be included in the software obtained from other administered devices 1403, 1412, or received directly from the data center 1410, or some other location.

Thus, the software inventory server 1408 receives periodic lists from agents designated as distributed server agents, and also receives requests from the agents for software designated as to be installed for the agent. For example, an agent 1413 sends an administered software list 1414 to the software inventory server 1408, which is kept in the database table 1419 for future reference. This list 1414 may only be sent once by the agent 1413 upon a software installation, or sent periodically (e.g., minutely, hourly, daily, weekly, monthly, etc.). The rate at which the list is sent will depend on the dynamic environment of the administered network, and can be set by the network administrators at the data center 1410, or the network administrators at the administered network 1420 via configuration directives.

When the software inventory server 1408 receives a location request from an agent 1405 attempting to find software needed for a release list 1407, the software inventory server searches lists in the administered network 1427. The software inventory server then compiles an administered network location list 1442 of where the software can be obtained from other administered devices on the administered network 1420. The administered network location list 1442 may indicate one or more locations where software can be found locally (e.g., within the administered network 1420). Multiple locations allow an updating agent to pull the software from another location in the event one administered device does not answer a software sharing request (e.g., a node is unavailable).

Further, if the agent is configured to select at random one of the multiple locations where software can be obtained, the sharing load can be shared among multiple administered devices. Sharing load can become a significant consideration, for example, if software is requested by or released to a very large number of agents simultaneously.

The information stored in the database (e.g., the table 1426) can vary substantially so long as the locations where software can be obtained from other agents on the administered network is facilitated. For example, a globally unique identifier (GUID) or token can be passed back and forth between the agent and the data center. An agent or administered device can be identified by a unique network identifier (e.g., network card IP address). Further, agents within a same sub-net can be categorized together using a sub-net mask function as applied to the IP address on packets received from the agents. Alternatively, a globally unique identifier can be assigned to agents or devices, and the identifier can be sent with communications made to the data center. The specific database table 1426 column headings can thus vary considerably.

In the illustrated example, after the agent 1405 determines that software can be obtained from another administered device (e.g., the device 1403) on the administered network, the software can be obtained from that administered device in a peer-to-peer sharing request (e.g., HTTP-based, SOAP-based, FTP-based, file sharing, or the like).

As previously discussed, the required software can be individually obtainable from multiple sources in segments, or grouped and compressed into a more distribution-friendly format (e.g. CAB, ZIP, or etc.).

### Example 10 - Exemplary List of Software

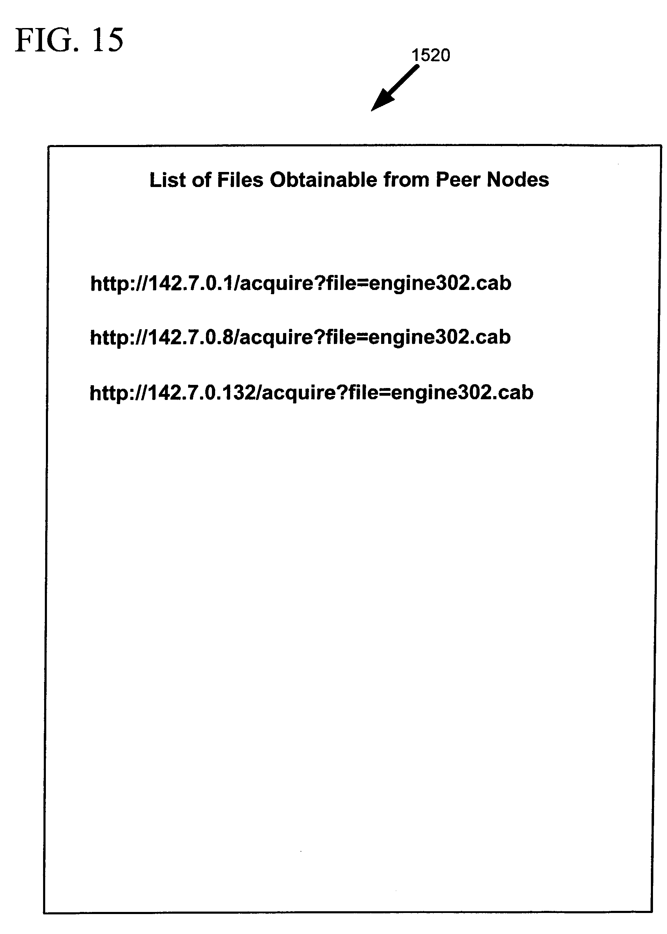

FIG. 15 shows an exemplary list 1520 of software obtainable from administered devices on an administered network. The list 1520 can be used for the administered network location list 1442 described above.

In the example, the list 1520 is provided in the form of network references (e.g., URLs) from which the software can be obtained. Nodes that share software respond to the HTTP requests (e.g., web server functionality at such nodes fields requests for software). Other protocols (e.g., FTP-based or SOAP-based) can be used.

Although packaged software (e.g., .CAB files) is shown, other formats (e.g., a script file) can be used. Thus, using the 1520, an agent updating administered software on its respective administered device can obtain the described software from several administered devices on the administered network. Next, if required software is not available from any of the locations on the list, the agent can obtain the software from the data center directly in a communication request (e.g., an HTTP-based or FTP-based request). Alternatively, the software list 1520 itself may include a fallback location to try if the others fail.

### Example 11 - Exemplary Alternative Distributed Server Arrangements

Although some of the examples depict arrangements in which the list of locations at which software is available is centralized, it is possible to have a decentralized (e.g., distributed) system instead. For example, one or more nodes can be designated as location servers. If a particular location server does not have information specifying a location for requested software, it can call upon another location server for assistance.

### Example 12 - Exemplary Methods in a Distributed Server Arrangement

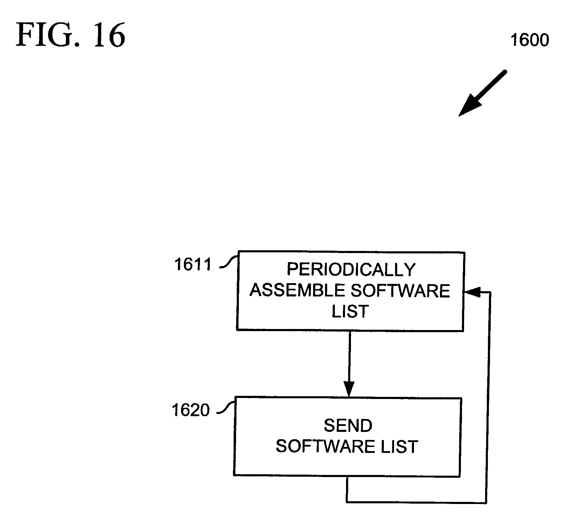

FIG. 16 shows an exemplary method 1600 for use in a distributed server arrangement. At 1611, a node (e.g., agent software) designated to provide distributed server functionally periodically assembles a list of the software available at the node for distribution to peer nodes. At 1620, the node sends (e.g., via an HTTP-based, SOAP-based, FTP-based, or other protocol) the list to a software inventory server (e.g., the software inventory server 1408 of FIG. 14). The list can later be used as discussed above to generate a list of software (e.g., the list 1442 of FIG. 14) that is available to peer nodes. The node can also send additional information for assisting in determining whether another node is local (e.g., on the same sub-net or behind the same network address translator). For example, a node-reported IP address and a sub-net mask can be sent.

Although the software on the list can correspond to the software currently installed on the administered device (e.g., the software 212 of FIG. 2), it is possible that the software is different software (e.g., a different program or a different release). For example, after software is upgraded, an old release may reside at the administered device. The administered device may periodically delete old releases to make room for newer ones.

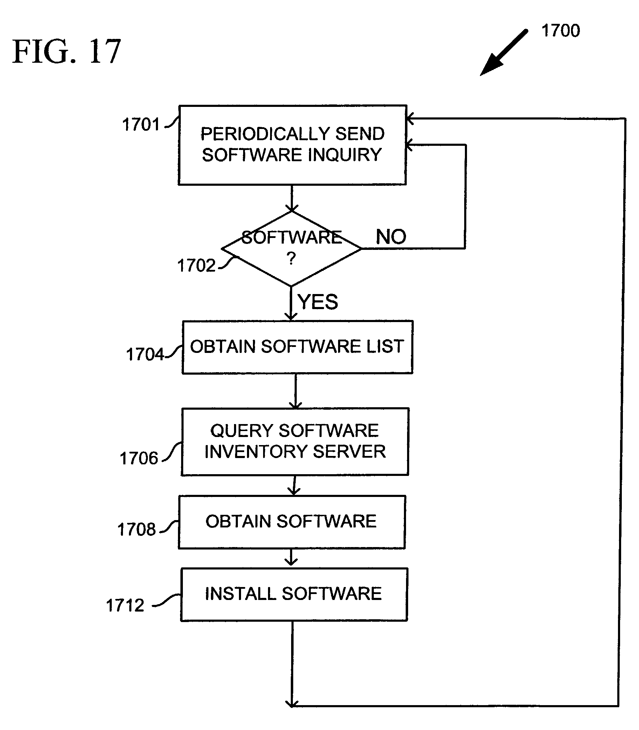

FIG. 17 shows an exemplary method 1700 for achieving installation of designated software in a distributed server arrangement. The method 1700 can be performed by an agent running at an administered node and communicating with a data center (e.g., via an application service provider scenario).

At 1701, a software inquiry is sent (e.g., via an HTTP-based, SOAP-based, or FTP-based protocol). The inquiry can be sent periodically to a data center (e.g., the data center 1410). The agent can periodically contact the data center in order to determine whether software is designated to be installed (e.g., and available) but not installed for that agent.

The data center can identify the agent via a unique identifier. At 1702, it is determined whether software is to be acquired. The determination can be made in many ways (e.g., by the data center, by the client, or some other entity). If no software is indicated at that time, the agent checks again later. The rate of periodic inquiry is adjustable as described in the below discussion of policies.

If the software request server indicates that a release is designated for a requesting agent, then the agent obtains a list of the software needed at 1704. The agent then sends a request to the data center at 1706, and is provided with one or more locations whereat the software can be obtained. In the example, the software is available at another administered device on the administered network (e.g., at a peer node in the same sub-net), and the location so indicates. The locations can be provided via network references (e.g., URLs).

Software obtainable at administered devices on the administered network is obtained at 1708. Such an approach can reduce external network traffic (e.g., traffic over the Internet). If software is not obtainable on the administered network, then it can be obtained from the data center or other remote server indicated by the data center (e.g., the location 1513 of FIG. 15). The obtaining agent can then initiate installation of the software on the administered device at 1712.

For a given release, software may be obtained by the agent from the data center, from an administered device on the customer's network (e.g., if it exists), or from both the data center and other nodes on the administered network. The agent may handle software acquisition and installation of administered software. But, the agent may also obtain and install a software release of the agent itself. Such an agent software release may also be received from the data center or from an administered device on the administered network (e.g., if available).

Finally, an administrator for the administered network can designate via a web-based form (e.g., in an application service provider scenario) one or more of the following: (1) how often agents periodically send a list of software available to other administered devices, (2) how often agents send a software inquiry to the software request server, (3) which agents can share software with other agents on the administered network (e.g., provide distributed server functionality), and (4) what software is to be installed (e.g., by an agent) at an administered device.

### Example 13 - Exemplary Proxy Server Overview

Some computers may be prohibited or unable to access certain external networks (e.g., the Internet). However, as previously discussed, agents running on administered devices may communicate with a data center via an external network (e.g., the Internet) in order to facilitate software distribution. Without external network access, an agent may be unable to communicate with the data center. In such a case, a method of communication with the data center over a network (e.g., the Internet) can be supported via a proxy server arrangement.

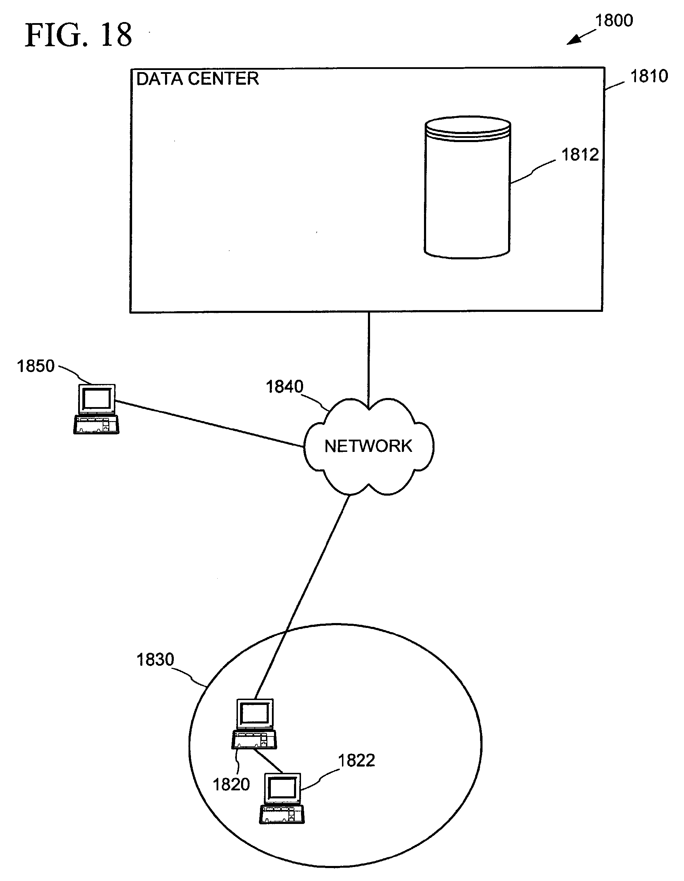

FIG. 18 shows an exemplary proxy server arrangement 1800. In the example, a data center 1810 maintains a database 1812 indicating software designated as to be installed at the nodes 1820 and 1822 within the network 1830. An administrator can use a computer 1850 to create or alter software designations in the database 1820 via a network 1840 (e.g., the Internet). The administrator can create or alter the software designations in an application service provider scenario.

In the arrangement 1800, the node 1822 does not have access to the network 1840. For example, there may be a firewall in place, or connectivity may otherwise be prohibited or impossible. Accordingly, the node 1820 serves as a proxy server by which the node 1822 can obtain software designated as to be installed on it (e.g., from the data center 1810 or a peer node). The proxy server functionality provided can be limited to communicating with the data center 1810 or a list of one or more other locations.

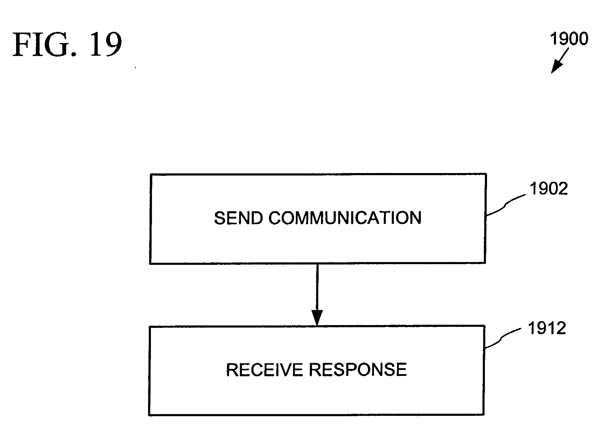

FIG. 19 shows an exemplary method 1900 for achieving a proxy server arrangement. The method 1900 can be performed by an agent to send communications to and receive communications from a data center via a proxy server.

At 1902, the agent sends a communication to a data center via the proxy server. The communication is directed to the proxy server with an indication that the proxy server is to forward the message to the data center on behalf of the sending agent. The proxy server receives the communication from the agent and then forwards the communication to the data center.

At 1912, the agent receives a response to the communication from the proxy server. For example, upon receiving a response to the communication from the data center, the proxy server forwards the response to the appropriate agent.

The communications can be, for example, software inquiries to determine what software is designated (e.g., by an application service provider scenario) to be installed but not yet installed at an administered node. Or, the communications can be a request for a location whereat software designated as to be installed at an administered device can be found. Further, the communications can be lists of software available at a node for sharing by peer nodes. Still further, the communications can be requests for software (e.g., downloading software).

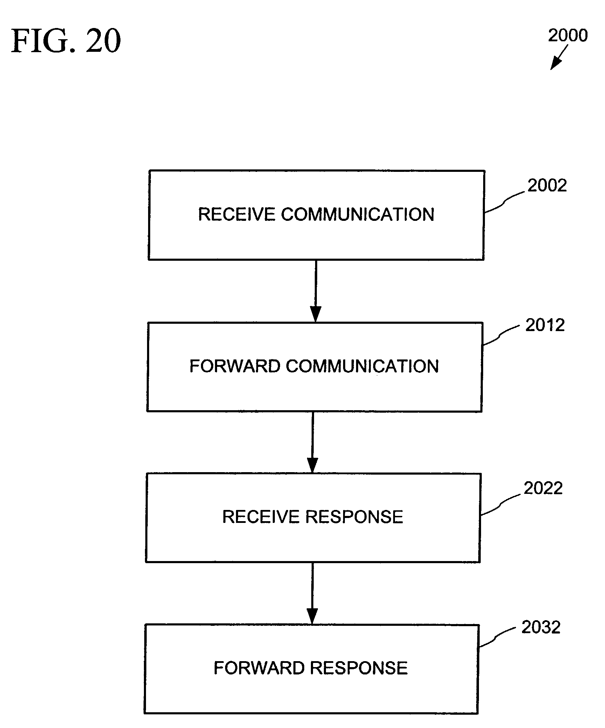

FIG. 20 shows an exemplary method 2000 by which a proxy server arrangement can be achieved. The method can be performed by a proxy server to send and receive messages between an agent and the data center.

At 2002, the proxy server receives a communication from an agent. The communication can include an indication (e.g., a node identifier) of the agent's identity.

At 2012, the proxy server forwards the communication to the data center. At 2022, the proxy server receives a response from the data center. At 2022, the proxy server forwards the response to the appropriate agent.

The proxy server can be used to facilitate network access by agents with no direct access to a network resource. Because the proxy server has external network access, it can act as a liaison for agents no having network access. For example, the proxy server can facilitate communications that facilitate software distribution. A node can be configured to act as a proxy server via configuration directives (e.g., as part of a policy) collected from an administrator (e.g., via an application service provider scenario). Any node can be so designated. A node newly designated to provide proxy server functionality and can begin providing such functionality as a result of interacting with the data center (e.g., when its agent polls the data center).

### Example 14 - Exemplary Proxy Server Arrangement

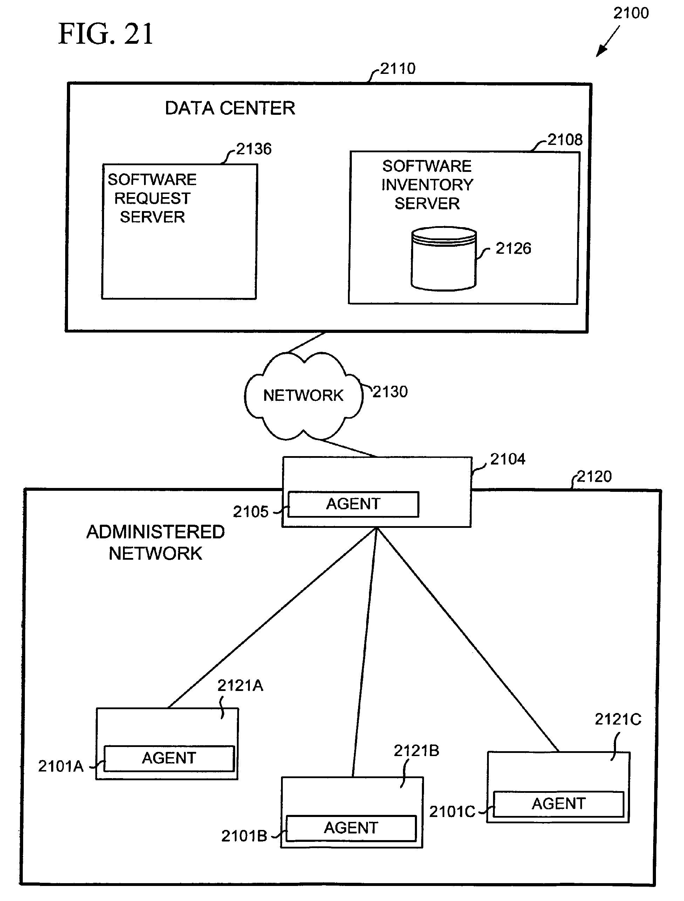

FIG. 21 depicts an exemplary proxy server arrangement 2100 in which communications with a data center 2110 can be accomplished by administered devices (e.g., nodes) not having direct access to the data center 2110. For example, software designated as to be installed at nodes can be provided to nodes not having direct access to a data center. In the example, multiple agents 2101A, 2101B, 2101C, and 2105 are running at nodes identifiable at the data center 2110 by node identifiers (e.g., GUIDs).

In the example, the proxy server node 2104 has access (e.g., HTTP-based access) to the data center 2110 via the network 2130 (e.g., the Internet). The other nodes 2121A, 2121B, and 2121C can communicate with each other and the node 2104 but do not have access (e.g., HTTP-based access) to the data center 2110. Certain agents 2101A, 2101B, and 2101C can communicate with the data center through another one of the agents 2105 which is acting as a proxy server at the proxy server node 2104.

In the example, an agent 2105 acts as a proxy server, so other administered devices 2101, 2109, and 2113 can communicate with the data center 2110. Thus, an administered device 2101 sends and receives messages over a network connection 2142 on the administered network 2120, which are collected by a proxy server 2104 and forwarded over the external network 2130 to the data center 2110.

The messages processed by the proxy server node 2104 can include those requesting a list of appropriate software, those reporting software available for sharing at a node, those requesting a location at which a particular piece of software can be obtained, and those providing requested software for installation. As described in the discussion of distributed server technologies, administered devices can periodically send lists of administered software to the data center or periodically make requests to the data center in order to determine whether a software release is designated. These communications can be accomplished via the proxy center node 2104.

In the example, the proxy server node 2104 servers as a network address translator. Accordingly, when distributed server functionality is provided in conjunction with the proxy server arrangement, the nodes utilizing the proxy server 2104 are considered local (e.g., within the same network or behind the same network address translator). For example, the arrangement of using a "received-from" network (e.g., IP) address as described above can be used. As a result, one node using the proxy server node 2104 can be provided another node using the proxy server node 2104 (e.g., a node providing distributed server functionality) as a location from which software can be obtained.

The proxy server and agents on the administered network may be pre-configured so agents know which administered device is acting as the proxy server. Or, the location of a proxy server can be discovered dynamically by an agent (when the agent needs to communicate with the data center) using a broadcast (e.g., DHCP-based) protocol on the administered network. A node configured as a proxy server node can respond to such broadcasts.

In the example, any node can be designated to act as a proxy server node via a configuration directive (e.g., specified as part of a policy in an application service provider scenario). When a node periodically polls the data center 2110 for configuration directives, it can then be instructed to activate proxy server functionality. For example, another node having access to the data center 2110 may be added and designated as an additional proxy server node. The proxy server node can also be a peer device (e.g., a peer to 2121A, 2121B, and 2121C).

Multiple available proxy servers can be helpful in case one proxy server fails, and can be helpful in a large network where the network traffic overwhelms a single proxy server. Very large administered networks might run more efficiently with large numbers (e.g., hundreds) of proxy servers.

In an embodiment where plural nodes serve as proxy servers, an agent needing to send a message through a proxy server can use a broadcast (e.g., DHCP-based) request to identify and obtain the services of one or more proxy servers. Finding appropriate nodes with which a requesting node can share software can then be accomplished.

### Example 15 - Distributed Server and Proxy Server Arrangement

The distributed server technologies described herein can be used in conjunction with the proxy server technologies described herein. For example, when a node accesses a proxy server to determine from where to obtain software, a reference to a peer node can be provided. In such a case, the data center can provide a list of nodes at which the requested software is available, including any nodes using the same proxy server to communicate with the data center. The distributed server and proxy server techniques can thus be utilized to provide a proxy server for providing distributed server software distribution functionality.

### Example 16 - Exemplary Policy Administration

An administrative user interface can be provided via a network reference. For example, the network reference can refer to a location (e.g., a web server) maintained by an application service provider. The administrative user interface can provide a variety of functions by which an administrator can administer software at administered devices, including configuring which administered devices are designated to provide (e.g., share) software to other administered devices and which administered devices may act as proxy servers to other administered devices. The administrator can also designate which software is administered by an agent.

Finally, an administrator can configure at what periodic rate agents make software requests to the data center, and at what periodic rate agents send administered software lists to the data center. Agents may be placed into named groups to facilitate ease in configuration administration.

### Example 17 - Exemplary Groups

Various nodes can be placed into named groups to facilitate administration of a large number of nodes. For example, a set of nodes can be placed into a group named "lab" to designate that the nodes are machines in a lab where software functionality is tested. A group can have one or more nodes and be associated with a group name.

The named group can then be associated with various configuration directives, including association with a proxy server enabled group. For example, a proxy server enabled group would allow an agent of the group to respond to broadcasts (e.g., requests) for locating a proxy server and also serve as a proxy server after answering the broadcast.

### Example 18 - Anti-Virus Software Administration

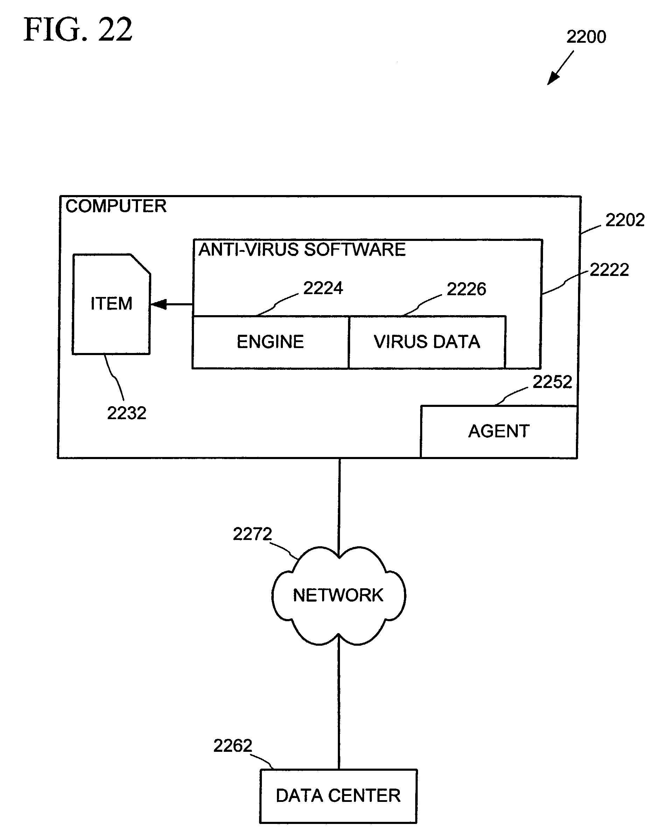

In any of the examples described herein, the software being administered or distributed can be anti-virus software. An exemplary anti-virus software arrangement 2200 is shown in FIG. 22.

In the arrangement 2200, a computer 2202 (e.g., a node) is running the anti-virus software 2222. The anti-virus software 2222 may include a scanning engine 2224 and the virus data 2226. The scanning engine 2224 is operable to scan a variety of items (e.g., the item 2232) and makes use of the virus data 2226, which can contain virus signatures (e.g., data indicating a distinctive characteristic showing an item contains a virus). The virus data 2226 can be provided in the form of a file.

A variety of items can be checked for viruses (e.g., files on a file system, email attachments, files in web pages, scripts, etc.). Checking can be done upon access of an item or by periodic scans or on demand by a user or administrator (or both).

In the example, agent software 2252 communicates with a data center 2262 (e.g., operated by an application service provider) via a network 2272 (e.g., the Internet). Communication can be accomplished via an HTTP-based protocol. For example, the agent 2252 can send queries for updates to the virus data 2226 or other portions of the anti-virus software 2222 (e.g., the engine 2224).

### Example 19 - Exemplary Implementation

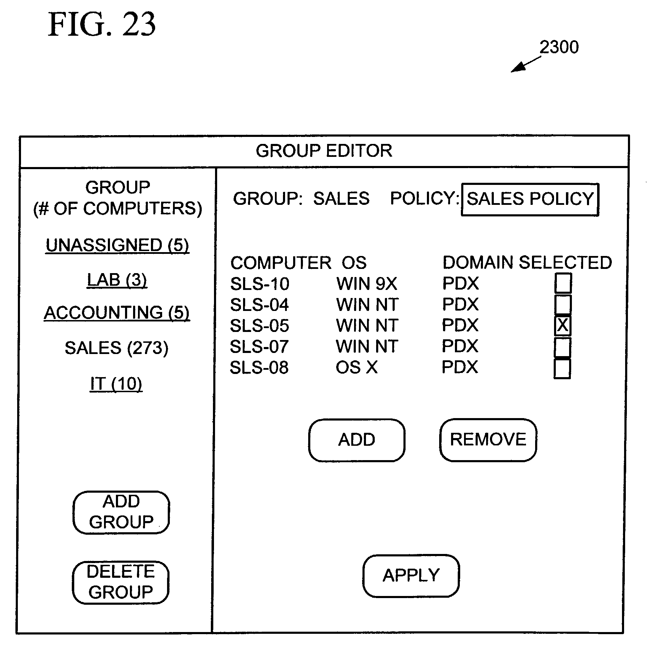

FIGS. 23-25 are screen shots illustrating an exemplary implementation related to the above technologies. The screen shots show a user interface as presented by a web browser such as the Microsoft Internet Explorer software, which is marketed by Microsoft Corporation. Other software can be used, and either Internet (e.g., http://www.*sitename*.com/*xyz.asp*) or intranet (e.g., http://*subnet.companyname*/*xyz.asp*) references can be used to acquire the user interfaces. The illustrated user interface can be provided by any number of software packages, including a server-side scripting environment (e.g., Microsoft active server pages technology) associated with a web server.

To acquire access to the application services, an organization can enter into a contractual arrangement with an application service provider vendor (e.g., by subscribing to the services and agreeing to pay a monthly fee). The application service provider can provide an appropriate network link and a user name and password by which an administrator can log into the system and begin administering the software.

During the process, it may be desirable to place one or more nodes into a named group. FIG. 23 shows a screen shot 2300 depicting an exemplary user interface for manipulating groups. A database of configuration information can be adjusted according to the administrator's selections.

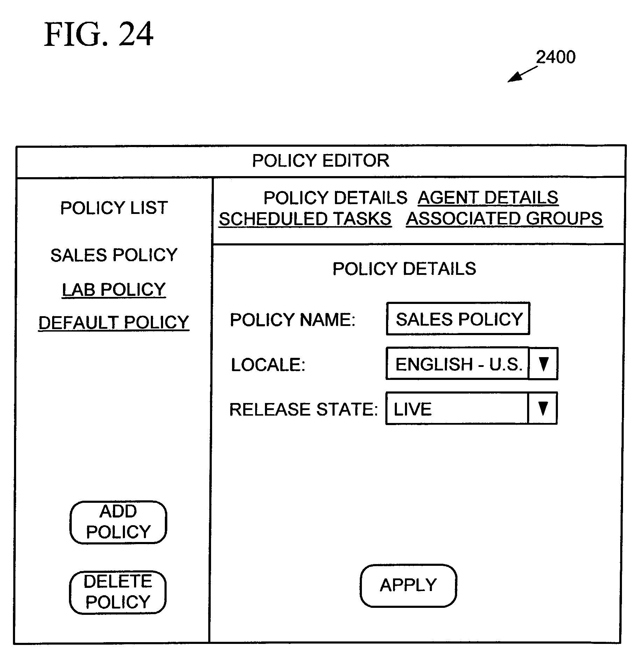

It may also be desirable to place one or more configuration directives into a named set. Such a named set can then be assigned to a group as shown in FIG. 24, which shows an exemplary user interface 2400 for manipulating policies. One directive of the policy (i.e., "Release State") relates to the stage of the software to be distributed for the group. The stage can be specified as "Beta," "Early," or "Live."

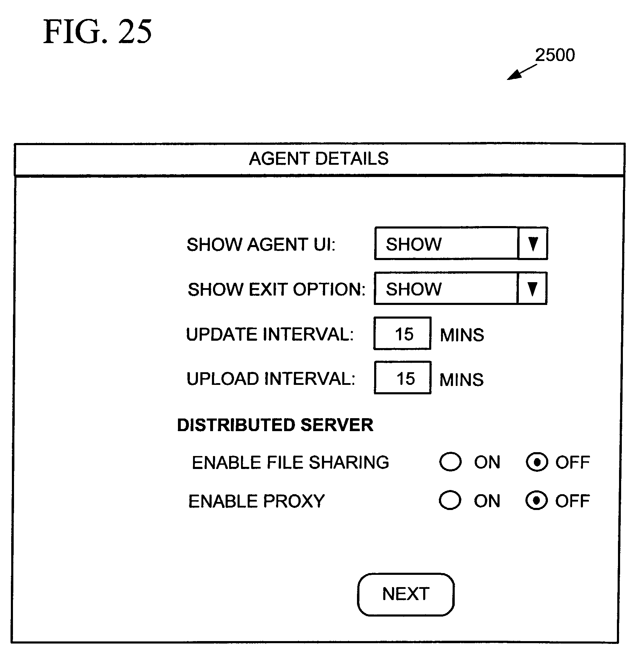

The configuration directives can take many forms. For example, FIG. 25 shows an exemplary user interface for manipulating configuration directives related to an agent. Changes by an administrator are stored in a configuration database, and agents assigned the related policy are updated accordingly (e.g., when they contact the application service provider data center). The user interface for the administered software can be hidden via the options (e.g., "Show Agent UI"). Also, as shown, an option "Show Exit option" can be used to control whether an icon appears in an icon menu by which a user can exit the software running at a node. FIG. 25 also shows an "update interval" used to set the periodic rate an agent queries the data center in order to determine whether any release is available for administered software. FIG. 25 also shows an "upload interval" which indicates how often an agent sends to the data center, a list of software under administration. FIG. 25 also shows how to configure whether an agent (or a group of agents) is enabled for software sharing and or proxy serving.

Other user interfaces can be provided by which tasks can be added and task recurrence specified. Additional recurrence parameters can be specified by another user interface (e.g., whether to occur every day or recur every *n* days, whether to recur indefinitely or *n* times, and whether to use default advanced settings, such as a jitter value, late limit, and maximum duration parameters).

Various other user interfaces can be presented. For example, a list of computers can be presented (e.g., indicating a computer name, domain, operating system, and group).

Software administration will proceed according to the configuration specified via the user interfaces. For example, if a group of computers has been configured to enable file sharing, when the related agents poll the data center, they will be provided with an indication that they are to begin providing file sharing functionality. For example, the agents will then provide a list of files available at the computers for sharing with peer computers.

For example, agent software at a node can send an HTTP-based request to a data center, providing a node identifier unique to the node. In response, the data center can provide a command indicating that file sharing is to be turned on.

The agent software can also acquire the software it needs to conform with the configuration information specified by the administrator. In this way, automatic software distribution via distributed server and proxy server arrangements can be accomplished.

When a new release becomes available (e.g., a software development team releases software), it can be added to an appropriate database with a reference indicating a location from which the release can be obtained. Subsequent queries from agents receive replies taking the new release into account. The software will thus percolate down to the agents as they request it. If a node is off-line (e.g., a mobile user having a computer not connected to a network), there may be some lag time, but upon connecting to the network, the agent can query the data center and an appropriate software list can be provided.

In the example, the software can be provided as files conforming to the .CAB file specification of Microsoft Corporation. If software administered by the system is no longer desired to be on a node, the software is uninstalled. The .CAB file may remain on the node so that another node can access it (e.g., in a peer-to-peer arrangement).

In this way, software administration can be accomplished via an application service provider scenario. Although administration can include a wide variety of functions, the illustrated example enables monitoring (e.g., for producing reports of virus infection), configuration, and installation of software. In addition, the polled pull scenarios described can allow the system to operate even though there may be a firewall in place. Thus, application administration can be performed in such a way that software is automatically updated through a firewall. Such an arrangement can provide a valuable service in many situations, such as for a large enterprise's information technology department. Such an enterprise may have 10, 100, 1000, 10,000, 100,000, or more nodes.

Because more than one such enterprise can be served in an application service provider scenario, 10,000, 100,000, 1,000,000, 10,000,000, or more nodes can be administered by the described technologies.

### Example 20 - Database Schema

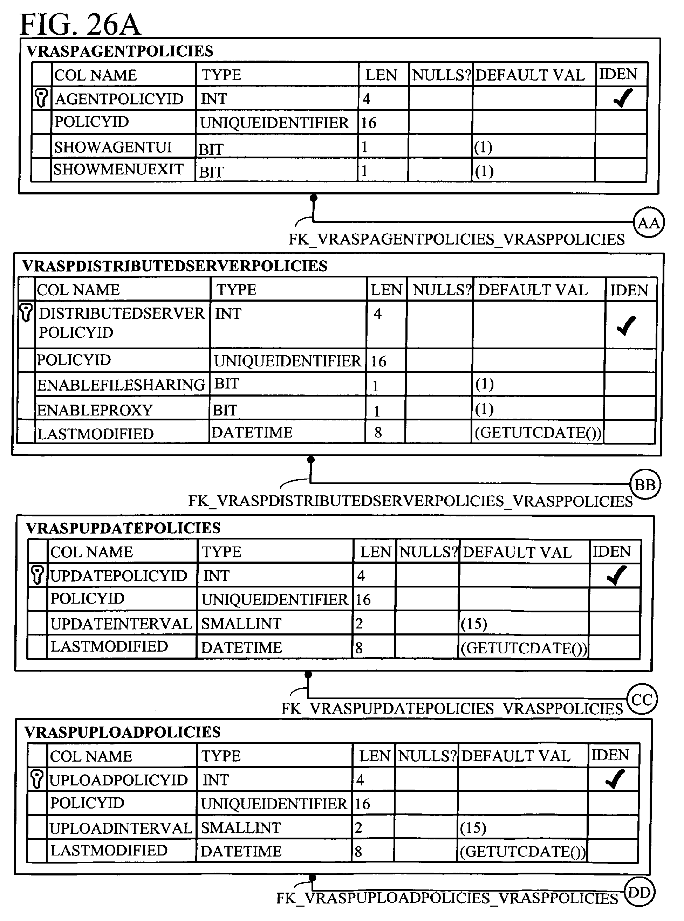

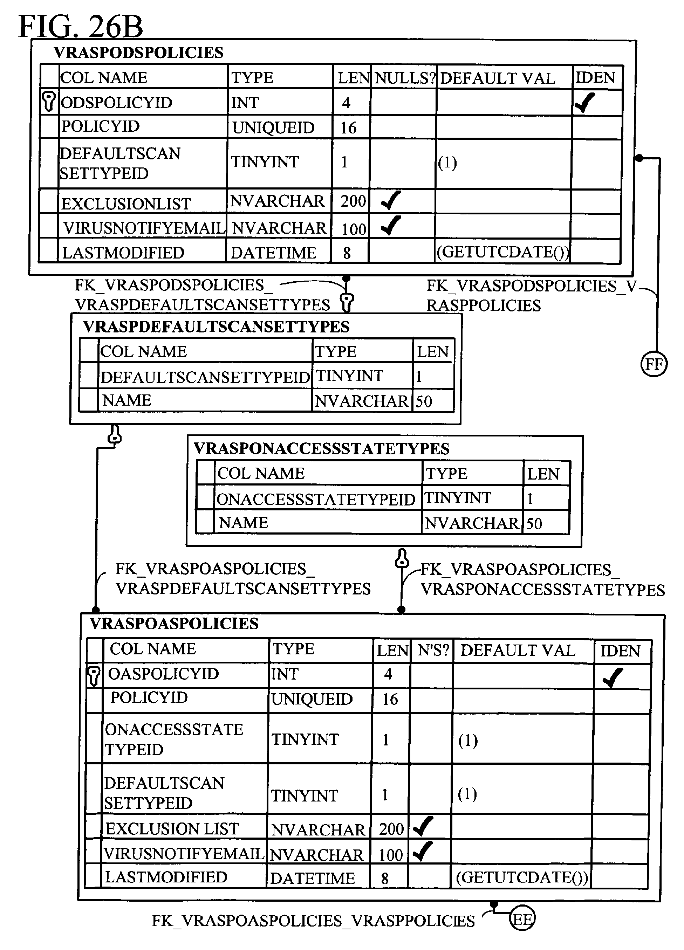

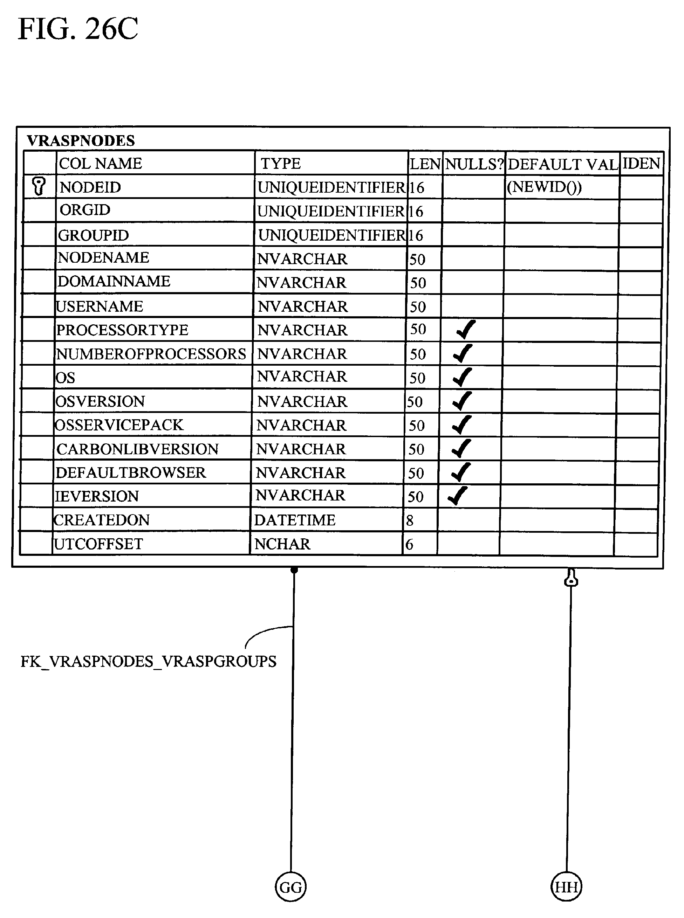

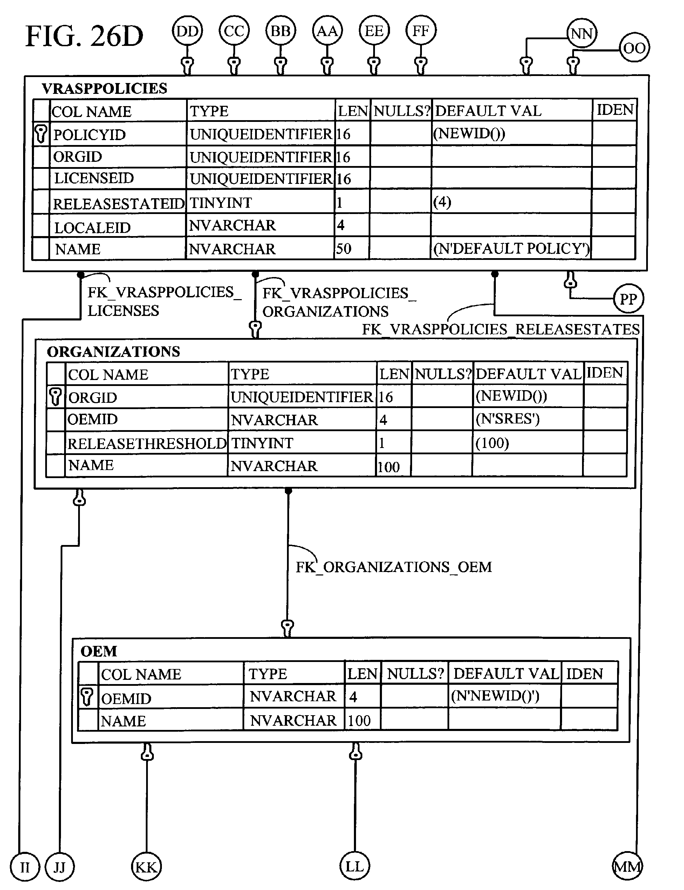

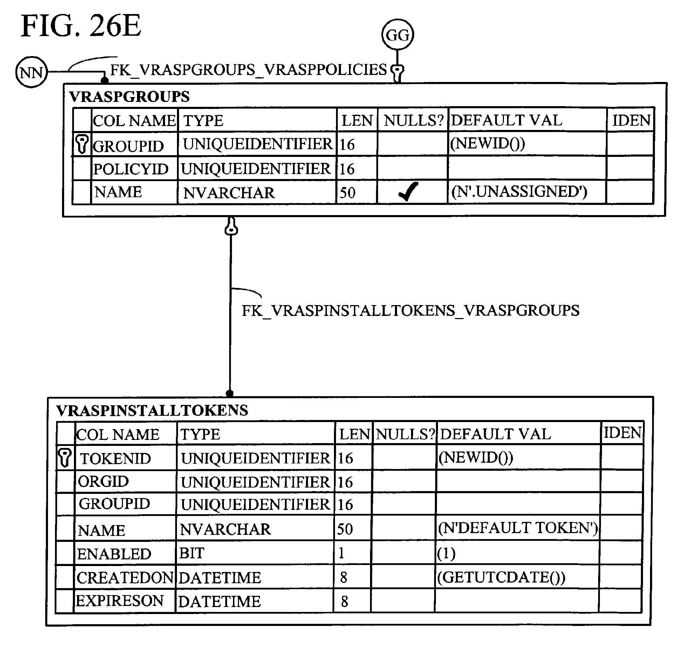

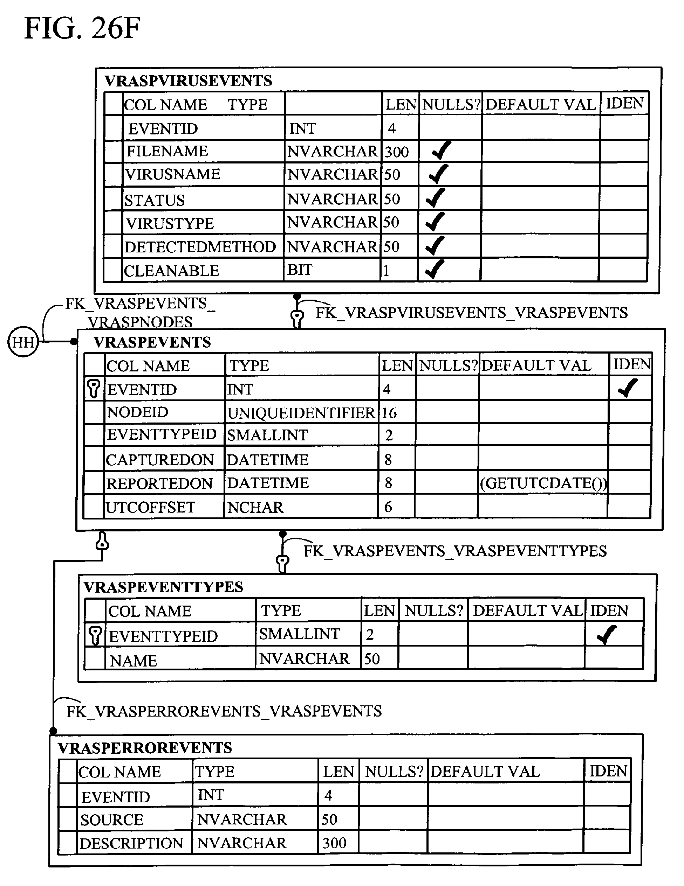

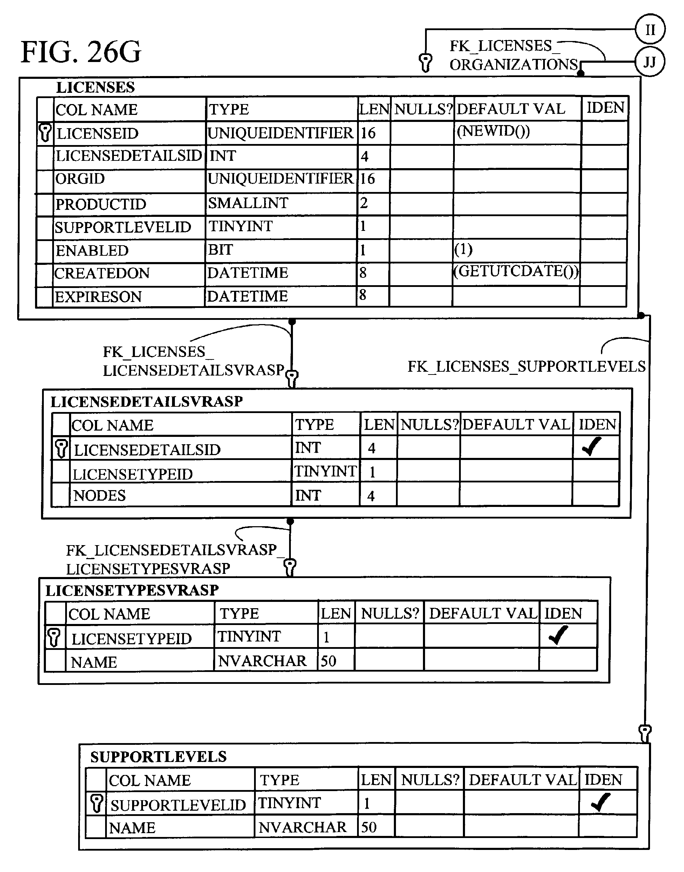

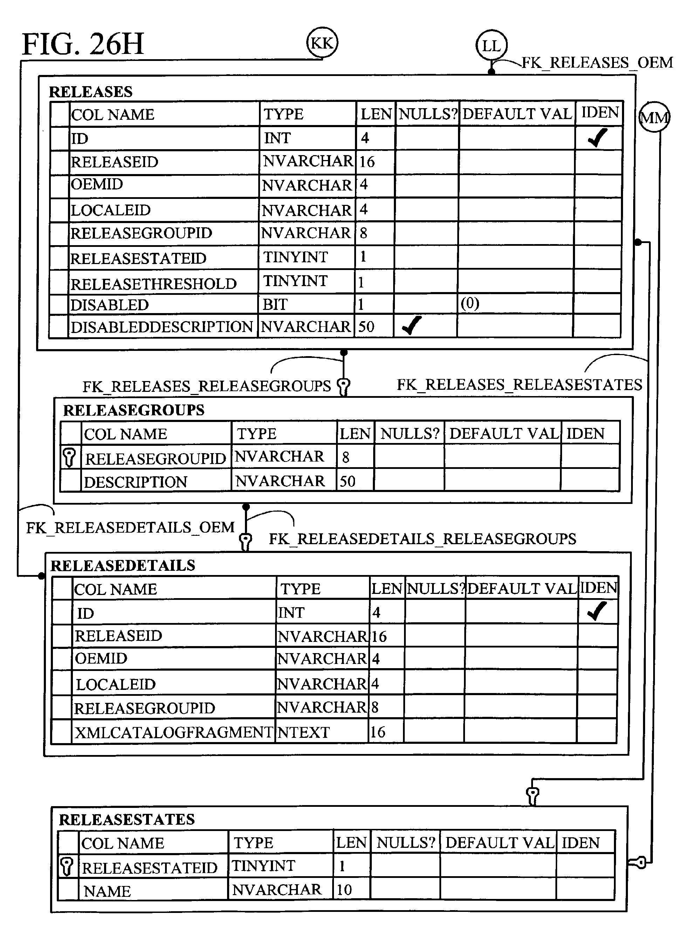

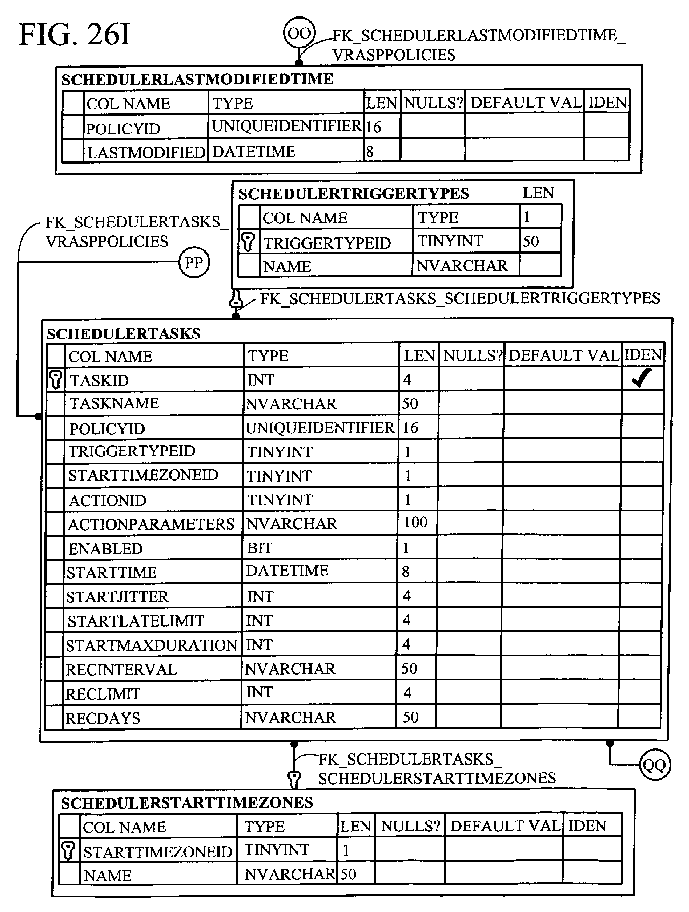

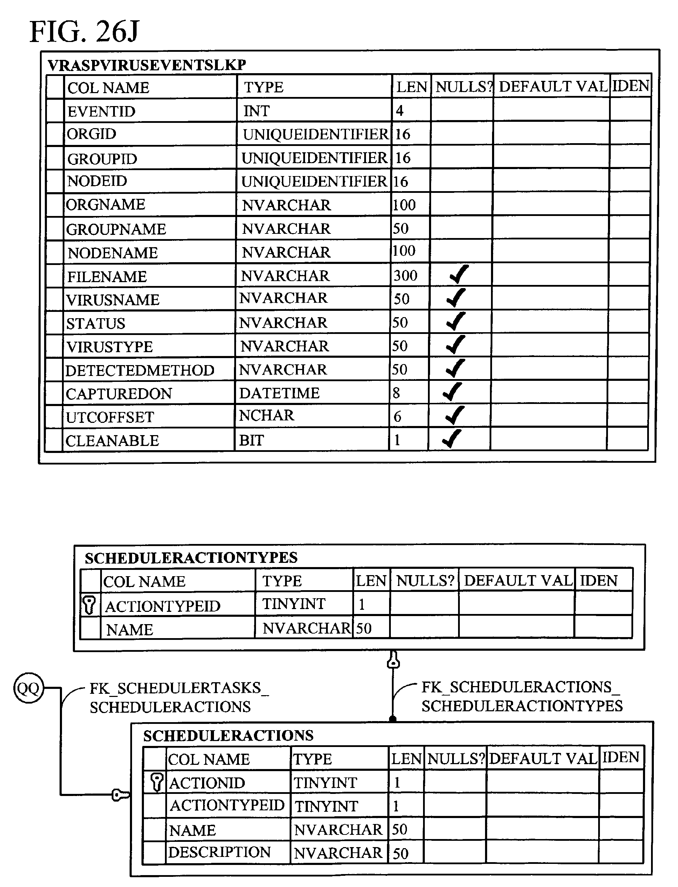

FIGS. 26A-J show an exemplary database schema for implementing software administration via an application service provider scenario.

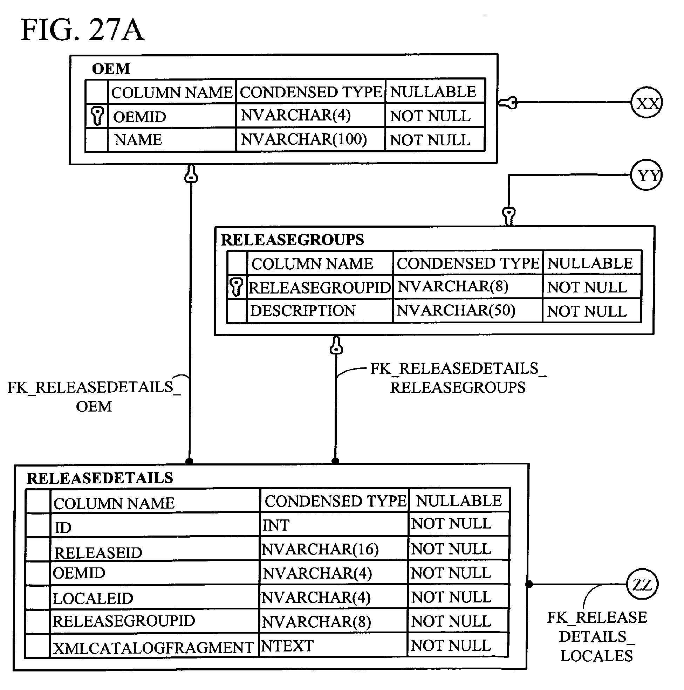

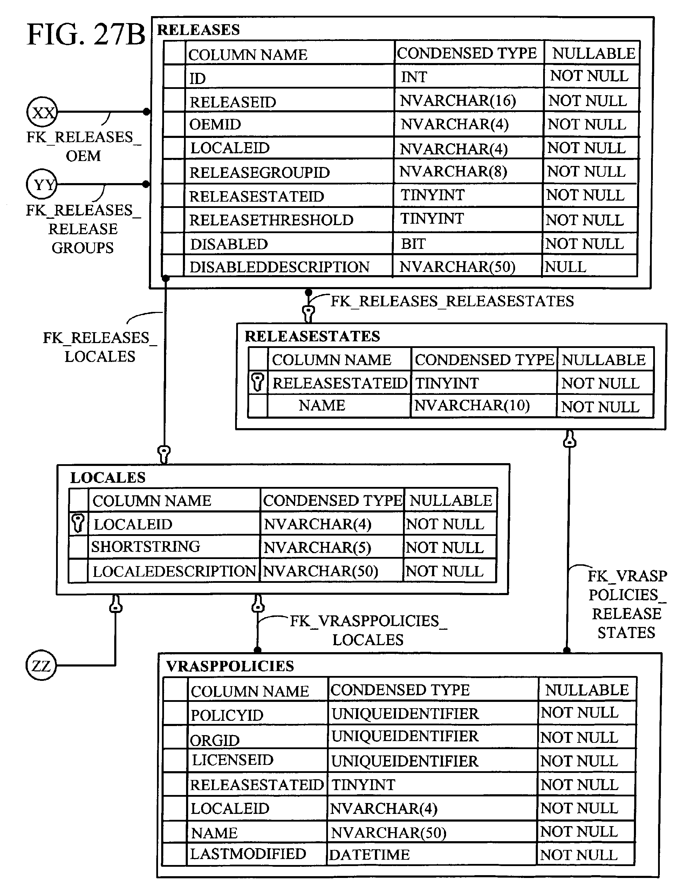

FIGS. 27A-B show another exemplary database schema for implementing software administration via an application service provider scenario.

The schema are examples only. A wide variety of other arrangements are possible, and another approach (e.g., XML) can be used.

### Alternatives

Having described and illustrated the principles of our invention with reference to illustrated embodiments, it will be recognized that the illustrated embodiments can be modified in arrangement and detail without departing from such principles. It should be understood that the programs, processes, or methods described herein need not be related or limited to any particular type of computer apparatus. Various types of general purpose or specialized computer apparatus may be used with, or perform operations in accordance with, the teachings described herein. Elements of the illustrated embodiment shown in software may be implemented in hardware and vice versa.

Technologies from the preceding examples can be combined in various permutations as desired. Although some examples describe an application service provider scenario, the technologies can be directed to other arrangements. Similarly, although some examples describe anti-virus software, the technologies can be directed to other arrangements.

In view of the many possible embodiments to which the principles of our invention may be applied, it should be recognized that the detailed embodiments are illustrative only and should not be taken as limiting the scope of our invention. Rather, we claim as our invention all such embodiments as may come within the scope and spirit of the following claims and equivalents thereto.

## Claims

1. In a distributed server environment, a method for distributing software among a plurality of administered devices, the method comprising:
receiving a request for software from an administered device, wherein the software is designated as to be installed at the administered device; and
responsive to the request, sending one or more locations to the administered device referring at least to an other one of the administered devices whereat the software can be obtained via a network connection.

2. A method according to Claim 1, wherein the locations comprise a Uniform Resource Locator and web server functionality at the other one of the administered devices is operable to respond to the Uniform Resource Locator.

3. A method according to Claim 1 or 2, further comprising:
before the sending, receiving via an application service provider scenario, an indication that one or more of the administered devices whereat the software can be obtained is to provide file sharing functionality.

4. A method according to any preceding claim, further comprising:
collecting information from a plurality of the administered devices sufficient to determine whether the administered devices are local to each other.

5. A method according to Claim 4, further comprising:
determining that one or more of the administered devices whereat the software can be obtained are local administered devices;
wherein the list comprises the local administered devices.

6. A method according to Claim 4 or 5, wherein the information comprises a sub-net mask.

7. A method according to Claim 4 or 5, wherein the information comprises a reported network address.

8. A method according to any preceding claim, further comprising:
from a remote computer, receiving an indication that the software is designated to be installed at the administered device.

9. A method according to any preceding claim, further comprising:
via an application service provider scenario, receiving an indication that the software is designated to be installed at the administered device.

10. A method according to any preceding claim, wherein at least one of the locations refers to an administered device within a same administered network as the requesting administered device.

11. A method according to any preceding claim, wherein:
the software request is received from a first administered device;
at least one of the locations refers to a second administered device; and
the first and second administered device are peers in a network.

12. A method according to any one of Claims 1 to 10, wherein:
the software request is received from a first administered device;
at least one of the locations refers to a second administered device; and
the first and second administered device both execute administered software.

13. A method according to any preceding claim, further comprising:
receiving from an administered device on an administered network, a software identification;
determining an identifier for the administered network; and
associating the software identification with the administered device and the administered network in the list of software available at the administered devices.

14. A method of providing distributed server functionality among a plurality of nodes at which software is distributed, the method comprising:
receiving an indication at a data centre that one or more nodes are designated to provide distributed server functionality;
responsive to communications by an agents at the designated nodes, configuring the node to provide distributed server functionality.

15. A method according to Claim 14, wherein the indication that the nodes are designated to provide distributed server functionality is received via an application service provider scenario.

16. A method according to Claim 14, wherein the indication that the nodes are designated to provide distributed server functionality is received via an HTTP-based protocol.

17. A method according to any one of Claims 14 to 16, wherein the distributed server functionality comprises:
sending a list of software available for installation at peer nodes to a data centre; and
responding to requests for software on the list.

18. A method according to any one of Claims 1 to 17, wherein the distributed server functionality comprises:
responding to HTTP-based requests from peer nodes for software for installation at the peer nodes.

19. A method for providing application services to a plurality of nodes, wherein one or more of the nodes are file sharing nodes providing file services to one or more of the other nodes, the method comprising:
receiving from the file sharing nodes an indication of software available for distribution to the one or more other nodes;
responsive to a request from a requesting node out of the one or more other nodes for software designated as to be installed at the requesting node, providing a reference to one of the file sharing nodes.

20. A method according to Claim 19, further comprising:
receiving from one or more of the file sharing nodes a network address reported by the file sharing node and an a network address from which communications from the file sharing nodes originate; and
comparing the network address reported with the network address from which communications originate to determine whether a network address translation has taken place.

21. A method according to Claim 19 or 20, further comprising:
responsive to determining that a network address translation has taken place, providing a reference comprising the network address reported to a node requesting software available at the file sharing node, wherein the requesting node uses a same network address from which communications originate.

22. A method according to any one of Claims 19 to 21, further comprising:
receiving from one or more of the file sharing nodes a network address and a sub-net mask;
based on the network address and the sub-net mask, determining that a requesting node is within the same network at the file sharing node; and
responsive to determining that the nodes are within the same network, providing the file sharing node as a location from which the requesting node can acquire software available at the file sharing node.

23. A system for providing application services for installing a plurality of software releases as designated on a plurality of administered devices on an administered network, the system comprising:
a data centre that associates an administered device with a designated software;
a server that accepts a software request from an administered device and responds with a release indication;
a server that accepts software release location requests and responds with a location indication.

24. A system for automatically distributing software via a network, the system comprising:
means for receiving information associating administered devices with software available at the administered devices;
means for replying to administered device requests for the location of software at administered devices operable to provide a peer location from which the software can be obtained.

25. A system according to Claim 24, wherein the means for replying to administered device requests for the location of software receives the requests via an HTTP-based protocol.

26. A method of distributing software via a distributed server, the method comprising:
receiving via a web-based administration form, a software designation for an administered device;
associating the software designation with the administered device;
receiving via a web-based request from an agent running on the administered device, a software release inquiry;
in response to the software release inquiry, determining that there is a release of the software designated for the administered device;
responding affirmatively to the software release inquiry, the response comprising a release identification;
receiving via a web-based request, a software location request from the administered device, said software location request including the release identification;
receiving a software list indication from a peer administered device;
in response to the software location request, determining that the software list indication includes a reference that matches the release identification in the software location request; and
sending to the administered device, a network location of the peer administered device.

27. A system for distributing the load of software distribution to peer nodes, the system comprising:
means operable to receive periodic indications from nodes indicating software available for distribution from the nodes;
means operable to receive an inquiry regarding which software is designated as to be installed at a node; and
means operable to provide a location indicative of a peer node at which software designated as to be installed at the node can be obtained.

28. A user interface for designating one or more nodes as to provide distributed server functionality in an application service provider scenario, the user interface comprising:
a user interface element operable to designate one or more nodes as to share files;
wherein the user interface element is provided by a data centre; and
wherein activation of the user interface causes the designated nodes to provide distributed server functionality responsive to polling the data centre.

29. In a distributed server environment, a method for facilitating the distribution of software from a data centre on a first network to an administered device, the method comprising:
receiving a communication related from an administered device;
forwarding the communication to the data centre;
receiving from the data centre, a response to the communication; and
returning the response to the administered device.

30. A method0 according to Claim 29, wherein the communications relate to distributing software designated as to be installed at the administered device.

31. A method according to Claim 29 or 30,0 wherein the communications relate to distributing software designated as to be installed at the administered device via an application service provider scenario.

32. A method according to any one of Claims 29 to 31,0 wherein the administered device is prohibited from accessing the first network.

33. A method according to any one of Claims 29 to 32, 0wherein the administered device is unable to access the first network.

34. A method of providing proxy access to a data centre providing information relating to software designated as to be installed at a node, the method comprising:
receiving a request from the node;
forwarding the request to the data centre;
receiving a response to the request; and
relaying the response to the node;
wherein the request is a request for a list of software designated as to be installed at the node.

35. A method according to Claim 34, 0wherein the software is designated as to be installed at the node via an application service provider scenario.

36. A method0 according to Claim 34 or 35, wherein the receiving, forwarding, and relaying are performed by a proxy node, and the proxy node is a peer of the node.

37. A method according to any one of Claims 34 to 36, 0further comprising identifying the proxy node via a broadcast protocol.

38. A user interface for designating one or more nodes as to provide proxy server functionality in an application service provider scenario, the user interface comprising:
a user interface element operable to designate one or more nodes as to be a proxy server;
wherein the user interface element is provided by a data centre; and
wherein activation of the user interface causes the designated nodes to provide proxy server functionality responsive to polling the data centre.

39. A computer program comprising computer program code means adapted to perform all of the steps of any one of claims 1 to 22, 26 or 29 to 37 when said program is run on a computer.

40. A computer program according to Claim 39, embodied on a computer-readable medium.
